# EUROPÄISCHE PATENTANMELDUNG

(11) **EP 3 622 811 A1**
(43) Veröffentlichungstag der Anmeldung: **18.03.2020**
(21) Anmeldenummer: 19197032.6
(22) Anmeldetag: 12.09.2019
(51) Int. Cl.: A01K 1/02

(54) **FAHRRADHUNDEKORB UND FAHRRAD**

(30) Priorität: 13.09.2018 DE 102018007246
(71) Anmelder: DOGSTYLER Soest GmbH, 59494 Soest (DE)
(72) Erfinder: Zachari, Klaus, 59494 Soest (DE)
(74) Vertreter: Vossius & Partner Patentanwälte Rechtsanwälte mbB

(57) **Zusammenfassung**

Die Erfindung betrifft einen Fahrradhundekorb (10) zum Transport von Haustieren, wobei der Fahrradhundekorb (10) mindestens ein Bodenelement (12) und mindestens eine wenigstens bereichsweise das Bodenelement (12) umlaufende seitliche Wand (14) umfasst, welche zusammen einen Aufnahmeraum (16) für ein zu transportierendes Haustier, wobei die seitliche Wand (14) den Aufnahmeraum wenigstens nach vorne und in zwei Seitenrichtungen begrenzt und wobei die seitliche Wand (14) wenigstens eine Hülle und wenigstens einen Schaumstoffkern aufweist. Weiterhin betrifft die Erfindung ein Fahrrad (30) mit einem daran befestigten Fahrradhundekorb sowie die Verwendung eines solchen Fahrradhundekorbs (10).

## Beschreibung

Die Erfindung betrifft einen Fahrradhundekorb zum Transportieren eines Haustiers, wie beispielsweise eines Hundes oder einer Katze. Weiterhin betrifft die Erfindung ein Fahrrad mit einem daran befestigten Fahrradhundekorb sowie die Verwendung eines Fahrradhundekorbs zum Transportieren eines Haustiers.

Häufig ist es von Haustierbesitzern gewünscht oder für diese nötig, ihr Haustier beim Zurücklegen einer Wegstrecke mit einem zweirädrigen Fahrzeug, wie beispielsweise einem Fahrrad, mitzunehmen. Hunde werden dabei häufig neben dem Fahrrad mitgeführt, wobei sie neben dem sich auf dem Fahrrad befindlichen Besitzer laufen. Dies stellt jedoch ein nicht unerhebliches Sicherheitsrisiko im Straßenverkehr dar. So kann sich das Haustier von anderen Verkehrsteilnehmern bedrängt fühlen, sich durch Geräusche erschrecken oder anderweitig abgelenkt werden. Dadurch erzeugte plötzliche und unerwartete Bewegungen des Haustiers können sich über eine Leine leicht auf den Haustierbesitzer übertragen und zu einer unsicheren Fahrweise oder gar zur Verursachung eines Unfalls beitragen. Läuft das Haustier hingegen frei neben seinem Besitzer, so kann es den Platz neben seinem Besitzer ungewollter Weise verlassen und einen Unfall verursachen und/oder entlaufen. Überdies eignet sich das Mitführen eines Haustieres neben einem Fahrrad beispielsweise nicht für ältere, kranke oder in ihrer Beweglichkeit eingeschränkte Haustiere. Bei motorisierten zweirädrigen Fahrzeugen, wie beispielsweise einem Roller oder einem E-Bike, kann ein Haustier auch zu langsam sein, um daneben her zu laufen.

Für Fahrräder gibt es eigene Anhänger für Haustiere, die in Fahrtrichtung hinten an einem Fahrrad befestigt werden können und in denen das Haustier platziert werden kann. Derartige Anhänger sind auf Grund ihrer Ausmaße jedoch vergleichsweise unhandlich und schwer und können die Bewegungsfreiheit beim Fahren, beispielsweise beim Wenden, einschränken. Zudem sind derartige Anhänger in der Regel nicht oder nur wenig gefedert, so dass Erschütterungen während der Fahrt kaum gedämpft werden. Dies führt häufig zu Unruhe bei dem sich im Anhänger befindlichen Haustier. Insbesondere dadurch hervorgerufene stärkere Bewegungen des Haustieres können die Fahrt ungewollt beeinflussen und so ein erhebliches Sicherheitsrisiko darstellen.

Bekannt sind auch sogenannte Hundefahrradkörbe, die wahlweise beispielsweise am Lenker oder auf dem Gepäckträger eines Fahrrades befestigt werden können.

Die US 2013/220231 A1 beschreibt beispielsweise einen abnehmbaren Träger für kleine Haustiere und die US 5,718,191 eine Vorrichtung, die zum Tragen eines Haustieres auf einem Zweiradfahrzeug ausgelegt ist. Bei diesen Vorrichtungen ist keine Sicherungsmöglichkeit des zu transportierenden Haustieres vorgesehen bzw. eine Haltevorrichtung, über welche das Haustier beispielsweise mit einem Halsband und/oder einem Geschirr gesichert werden kann. In beiden Fällen können derartige Vorrichtungen jedoch insbesondere im Falle eines Unfalls eine Verletzung des Haustieres gegebenenfalls nicht vermeiden, da dieses beispielsweise herausgeschleudert werden kann oder am Geschirr und/oder Halsband schmerzhaft eingeschnürt werden kann.

Bauweisen bekannter Hundefahrradkörbe sind häufig einer der folgenden drei Varianten zuordenbar. In einer Variante sind diese Hundefahrradkörbe aus Naturmaterialien, wie beispielsweise Weide oder Rattan, geflochten. Diese sind aufgrund des geringen Gewichts und der hohen Formstabilität beliebt, haben jedoch den Nachteil, dass sie pflegebedürftig sind und aufgrund der eingesetzten Naturmaterialien nicht immer von einheitlicher Qualität sind. Insbesondere bei anhaltender Feuchtigkeit können solche Körbe zudem schnell schimmeln. Als weitere Variante sind Hundefahrradkörbe bekannt, die aus einer harten Schale aus Plastik gebildet sind. Solche Körbe sind vergleichsweise witterungsresistent, bieten jedoch häufig kein optimales Mikroklima für das Haustier und können für das zu transportierende Haustier generell unbequemer sein. Ohne zusätzliche Federung oder Polsterung werden bei beiden Varianten Erschütterungen während der Fahrt in der Regel nicht ausreichend gedämpft. Dies kann zu Unruhe und verstärkten Bewegungen des Haustiers führen und damit ein erhebliches Sicherheitsrisiko während der Fahrt darstellen. Durch die Verwendung vergleichsweise harter Materialien bieten diese Körbe zudem kaum Schutz bei einem Aufprall des Haustieres auf die Korbinnenseite, beispielsweise bei einem Unfall. Bei einer dritten Variante von Hundefahrradkörben ist der Korb aus Kunsttextilien gebildet, welche durch Verstärkungen in Form einer Stützstruktur, wie beispielsweise einem Gitter oder einem Gestänge, in Form gehalten werden. Die Bauweise dieser Hundefahrradkörbe ist deswegen komplex, umfasst viele Teile und ist teuer. Jeweilige Verstärkungen, wie Gitter oder Gestänge, können insbesondere bei abrupten Bremsvorgängen das Verletzungsrisiko erhöhen, da das Haustier gegen die harte Verstärkung geschleudert werden kann. Allen drei Varianten ist dabei gemein, dass Sie für das darin transportierte Haustier fast keinen Schutz im Falle eines Verkehrsunfalls bieten, insbesondere nicht vor einem Herausschleudern des Haustieres aus dem Hundefahrradkorb. Auch beispielsweise gitterartige Abdeckungen an der Oberseite des Hundefahrradkorbes können im Fall eines Sturzes zu einer Verletzung des Haustieres führen.

Das Mitführen eines Haustieres auf einem zweirädrigen Fahrzeug ist daher häufig mit einem Sicherheitsrisiko verbunden, insbesondere im Falle eines Unfalls. Aufgabe der vorliegenden Erfindung ist es daher, die Sicherheit für das Haustier beim Mitführen auf einem zweirädrigen Fahrzeug zu erhöhen.

Diese Aufgabe wird erfindungsgemäß durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben, wobei vorteilhafte Ausgestaltungen eines Erfindungsaspekts als wechselseitig vorteilhafte Ausgestaltungen der jeweiligen anderen Erfindungsaspekte anzusehen sind.

Ein erster Aspekt der Erfindung betrifft einen Fahrradhundekorb zum Transport von Haustieren, wie beispielsweise einem Hund oder einer Katze. Der Fahrradhundekorb kann dabei mindestens ein Bodenelement und mindestens eine wenigstens bereichsweise das Bodenelement umlaufende seitliche Wand aufweisen, welche zusammen einen Aufnahmeraum für ein zu transportierendes Haustier definieren. Die seitliche Wand kann dabei den Aufnahmeraum wenigstens nach vorne und in zwei Seitenrichtungen begrenzen. Die seitliche Wand kann wenigstens eine Hülle und wenigstens einen Schaumstoffkern aufweisen. So kann ein Aufprall des zu transportierenden Haustieres auf die seitliche Wand durch den Schaumstoffkern abgefedert beziehungsweise gedämpft werden, beispielsweise im Falle von ruckartigen Fahrzeugbewegungen, starken Kurvenbewegungen oder auch eines Unfalls. Der Schaumstoffkern ist dabei vorzugsweise elastisch ausgebildet und/oder höchstens so steif und/oder hart, dass er bei einem entsprechenden Aufprall noch bereichsweise verformt wird, vorzugsweise reversibel. Gleichzeitig stellt die seitliche Wand so auch eine Polsterung bereit, die angenehm für das Haustier ist, insbesondere, wenn es sich beispielsweise an diese anlehnt oder beim Hinlegen dagegen stößt. Insgesamt bietet der Fahrradhundekorb so eine erhöhte Sicherheit, insbesondere im Falle eines Verkehrsunfalls, und kann besonders komfortabel für das Haustier sein, wodurch dieses ebenfalls ruhiger sein kann und in Folge dessen ebenfalls die Fahrsicherheit erhöht ist. Zudem kann der Fahrradhundekorb besonders robust sein. Im Gegensatz zu harten Strukturen, wie diese bei Flechtkörben, Körben mit Plastikhartschale und Körben mit Rahmenstrukturen zu finden sind, wird eine Bauweise mit Hülle und Schaumstoffkern erst bei wesentlich größeren Belastungen beschädigt. Beispielsweise kann eine Plastikhartschale bei einem Sturz brechen während der Schaumstoffkern im Wesentlichen unbeschädigt bleiben kann. Zudem kann eine Bauweise mit Schaumstoffkern wesentlich leichter sein als die bekannten und oben beschriebenen Bauweisen. Auch die Herstellung kann wesentlich einfacher und kostengünstiger sein.

Der Fahrradhundekorb ist vorzugsweise dazu ausgebildet, an einem zweirädrigen Fahrzeug, wie beispielsweise einem Fahrrad, nach Art eines Fahrradkorbes befestigt zu werden und ein oder mehrere Haustiere zu transportieren. Bei dem zweirädrigen Fahrzeug kann es sich beispielsweise zum Personentransport geeignete motorisierte oder unmotorisierte zweirädrige Landfahrzeuge wie beispielsweise Fahrräder, Roller, Mopeds und Motorräder, aber auch Liegeräder sowie Trikes beziehungsweise Dreiräder handeln. Die übliche Art der Befestigung eines Fahrradkorbes ist beispielsweise in Fahrrichtung vorne an einem Lenker, an einer Lenkstange, einer vorderen Reifengabel und/oder an einem anderen insbesondere vorderen Rahmenteil des Fahrrads. Alternativ oder zusätzlich wird ein Fahrradkorb auch üblicherweise an oder auf einem Gepäckträger befestigt, welcher beispielsweise vorne oder hinten am Fahrrad vorhanden sein kann. Vorne und hinten wird dabei durch die normale Fahrtrichtung des Fahrrads definiert.

Der Begriff Haustierbesitzer umfasst im Folgenden sowohl den tatsächlichen Haustierbesitzer als auch Personen, die das betreffende Haustier mittels eines Fahrradhundekorbes transportieren. Bei dem Haustier kann es sich beispielsweise um einen Hund, eine Katze, einen Hasen, ein Karnickel, ein Meerschweinchen, oder andere kleine bis mittelgroße Tiere handeln. Vorzugsweise weist der Fahrradhundekorb daher eine an die jeweilige Haustiergröße angepasste Größe auf.

Auch die Steifigkeit und/oder Härte des Schaumstoffkerns kann an die Größe bzw. an das Gewicht des zu transportierenden Haustiers angepasst sein. Beispielsweise kann bei einem Fahrradhundekorb, welcher im Folgenden auch einfach als Korb bezeichnet wird, für einen großen und schweren Hund ein steiferer Schaumstoffkern eingesetzt werden als bei einem Korb für einen kleineren und leichteren Hund. Dadurch kann sichergestellt werden, dass sich der Fahrradhundekorb nicht unzulässig weit unter erwarteten Belastungen verformt und dennoch ausreichend Dämpfung und/oder Polsterung zur Verfügung gestellt wird. Dafür kann der Fahrradhundekorb so ausgebildet sein, dass jeweilige Schaumstoffkerne ausgetauscht werden können. Dabei kann auch ein Set von mehreren Schaumstoffkernen für verschiedene Gewichtsklassen zur Verfügung gestellt werden, welche der Nutzer, je nach Gewicht des zu transportierenden Haustiers, auswählen und einsetzen kann.

Das Bodenelement definiert den Aufnahmeraum nach unten und bildet eine Bodenfläche des Aufnahmeraums aus. Das Bodenelement kann als Bodenplatte ausgebildet sein, insbesondere als ebene Bodenplatte. Entsprechend kann die Bodenfläche eine Ebene sein. Das Bodenelement kann beispielswiese in seiner Haupterstreckungsrichtung bzw. in Draufsicht von oben auf die Bodenfläche eine rechteckige Grundform aufweisen. Die Bodenfläche ist bevorzugt kleiner als 1 m², insbesondere kleiner als 0,5 m², besonders bevorzugt kleiner als 0,2 m². Im Falle einer rechteckigen Bodenplatte kann der Umfang der rechteckigen Grundform kleiner oder gleich 160 cm sein, bevorzugt kleiner oder gleich 130 cm, und besonders bevorzugt kleiner oder gleich 110 cm. Im Falle einer rechteckigen Bodenplatte weist diese bevorzugt mindestens eine Außenkante auf, die kleiner oder gleich 75 cm ist, bevorzugt kleiner oder gleich 50 cm, und besonders bevorzugt kleiner oder gleich 30 cm. Insbesondere können alle Außenkanten kleiner oder gleich sein. Bei anderen Formen weist der Fahrradhundekorb beispielsweise bevorzugt einen Durchmesser auf. der kleiner oder gleich 75 cm ist, bevorzugt kleiner oder gleich 50 cm, und besonders bevorzugt kleiner oder gleich 25 cm.

Der Fahrradhundekorb ist beispielsweise dazu ausgebildet, Haustiere mit einem Gewicht von maximal 40 kg zu transportieren, bevorzugt von maximal 20 kg, oder von besonders bevorzugt maximal 5 oder 10 kg.

Die seitliche Wand steht bevorzugt in Hochrichtung vom Bodenelement ab, bevorzugt im Wesentlichen orthogonal zu der Haupterstreckungsrichtung des Bodenelements. Die Ausrichtung der seitlichen Wand kann dabei auch durch jeweilige Haupterstreckungsrichtungen von jeweiligen Wandelementen der seitlichen Wand definiert sein. Insbesondere kann an jeder Kante des Bodenelements ein zugeordnetes Wandelement angrenzend angeordnet sein, insbesondere ein im Wesentlichen ebenes Wandelement. Die Hochrichtung kann durch die Bodenfläche definiert sein, insbesondere durch die Orthogonale zu einer ebenen Bodenfläche.

Der Aufnahmeraum wird bevorzugt in alle seitlichen Richtungen von der seitlichen Wand begrenzt, also in Bezug auf eine am Fahrrad befestigte Position sowohl nach vorne als auch nach hinten sowie auch nach links und nach rechts. Im Falle einer rechteckigen Bodenplatte beispielsweise kann die seitliche Wand vier seitliche Richtungen des Aufnahmeraums begrenzen. Der Aufnahmeraum kann optional auch gänzlich durch eine das Bodenelement vollständig umlaufende seitliche Wand begrenzt werden, insbesondere durch eine durchgängig umlaufende seitliche Wand.

Die seitliche Wand kann die Höhe des Fahrradhundekorbes in Hochrichtung vorgeben. Die Höhe des Fahrradkorbs kann bevorzugt maximal 50 cm betragen, besonders bevorzugt maximal 40 cm und besonders bevorzugt maximal 30 cm. Die Höhe kann der Erstreckung in Hochrichtung entsprechen. Die seitliche Wand kann dabei so ausgebildet sein, dass alle ihre Bereiche in Hochrichtung dieselbe Höhe aufweisen.

Insbesondere wenn die seitliche Wand vollständig das Bodenelement umlaufend ausgebildet ist, kann es vorteilhaft sein, dass mindestens ein Bereich der seitlichen Wand eine geringere Höhe in Hochrichtung aufweist, beispielsweise maximal 30 cm, bevorzugt maximal 20 cm, und besonders bevorzugt maximal 15 cm. Die Höhe kann der Erstreckung in Hochrichtung entsprechen. Eine so gebildete Aussparung bzw. Vertiefung in der seitlichen Wand kann eine Zugangsmöglichkeit zu dem Aufnahmeraum bilden, durch die sich das Haustier einfach selbst in den Fahrradhundekorb bewegen kann, wenn dieser auf dem Boden abgestellt ist. Alternativ oder zusätzlich kann der Fahrradhundekorb auch mindestens eine Durchgangsöffnung in der seitlichen Wand aufweisen. Dies ist insbesondere vorteilhaft, wenn der Aufnahmeraum auch in Hochrichtung an der Oberseite begrenzt wird.

Die Aussparung und/oder mindestens eine Durchgangsöffnung weist bevorzugt in Richtung Haustierbesitzer, wenn der Fahrradhundekorb an einem zweirädrigen Fahrzeug befestigt ist. Auf diese Weise können sich Haustierbesitzer und Haustier sehen, was eine beruhigende Wirkung auf Mensch und Tier haben kann. Zudem ermöglicht dies eine einfache Aufsicht, da es das Bemerken von Unruhe oder Unwohlsein des Haustieres erleichtert und ein rasches Reagieren des Haustierbesitzers darauf ermöglicht. So können stärkere Bewegungen des Tieres vermieden werden, die sich auch auf das Fahren auswirken können. Dadurch kann die Sicherheit während der Fahrt ebenfalls erhöht sein.

Die seitliche Wand umfasst bevorzugt einen Schaumstoffkern als strukturgebenden und tragenden Teil. Der Schaumstoffkern kann damit auch als tragende Struktur bezeichnet werden. Tragende Struktur kann hierbei bedeuten, dass der Schaumstoffkern und/oder jeweilige andere einen Schaumstoffkern aufweisende Elemente nicht durch zusätzliche Teile gestützt werden müssen, um ihre Form beizubehalten. Die jeweiligen Elemente können entsprechend Lasten bei nur geringer, vorzugsweise elastischer Verformung, besonders bevorzugt ohne Verformung, aufnehmen. Die tragende Struktur der seitlichen Wand wird vorzugsweise vollständig aus dem Schaumstoffkern gebildet. Insbesondere kann die seitliche Wand dann frei von anderen Strukturbauteilen sein. Der Schaumstoffkern kann beispielsweise eine Dicke zwischen 2 cm bis 5 cm aufweisen, bevorzugt zwischen 2,5 cm und 3,5 cm, und besonders bevorzugt von 3 cm. Die Höhe kann der Erstreckung in Hochrichtung entsprechen. Dadurch stellt der Schaumstoffkern die strukturelle Integrität der seitlichen Wand sicher und dämpft zugleich Stöße und Erschütterungen im Zuge des Transports für das Haustier durch die seitliche Wand.

In weiterer vorteilhafter Ausgestaltung des Fahrradhundekorbs ist vorgesehen, dass der Schaumstoffkern aus einem Kaltschaum Material gebildet ist oder besteht. Ein geeigneter Schaumstoff für den Schaumstoffkern ist beispielsweise der PolyurethanSchaum T-40373. Bevorzugt weist der Schaumstoffkern eine Dichte von 25 kg/m³ bis 55 kg/m³, besonders bevorzugt 30 kg/m³ bis 45 kg/m³, ganz besonders bevorzugt 37,5 kg/m³ bis 40,5 kg/m³ auf. Die Dichte kann dabei auch als Raumgewicht bezeichnet werden. Alternativ oder zusätzlich kann der Schaumstoffkern eine Stauchhärte von 200 N bis 500 N, besonders bevorzugt 250 N bis 450 N, ganz besonders bevorzugt 300 bis 400 N aufweisen. Die Stauchhärte ist dabei ein Maß für die Festigkeit des Schaumstoffkerns.

Der Schaumstoffkern ist bevorzugt als Schaumstoffplatte ausgebildet und von der Hülle wenigstens teilweise, bevorzugt vollständig, ummantelt. Bereiche der seitlichen Wand bzw. einzelne Wandelemente können zum Beispiel getrennte Schaumstoffkerne oder auch einen gemeinsamen Schaumstoffkern aufweisen und/oder über eine gemeinsame Hülle miteinander verbunden sein. Die Hülle kann aus einem oder mehreren Materialien gebildet sein, wie beispielsweise Leder, Kunstleder, Textil und/oder einer Membran, wobei das Material bevorzugt flüssigkeitsabweisend oder auch flüssigkeitsdicht ist. Bevorzugt ist das Material ferner widerstandsfähig in Hinblick auf möglicherweise scharfe Krallen des Haustieres, zudem leicht zu reinigen und bei Sonneneinstrahlung nicht schnell ausbleichend oder brüchig werdend. Die Hülle ist zudem bevorzugt lösbar an dem Schaumstoffkern befestigt, der dadurch in der Hülle angeordnet ist. Somit ist der Schaumstoffkern vor dem Eindringen von Flüssigkeiten und Feuchtigkeit geschützt und die Hülle kann im Fall von Verschmutzungen gesondert gereinigt werden.

Neben dem Schaumstoffkern kann in der Hülle zusätzlich mindestens eine Schicht aus Abstandsgewirk angeordnet sein, die eine zusätzliche Dämpfung und/oder verbesserte Luftzirkulation im Aufnahmeraum ermöglicht.

Das Bodenelement und die seitliche Wand können einstückig ausgebildet sein oder aber auch als getrennte Elemente. Sind Bodenelement und seitliche Wand als getrennte Elemente ausgebildet, so ist die seitliche Wand bevorzugt an dem Bodenelement befestigt. Bodenelement und seitliche Wand können alternativ oder zusätzlich auch über eine gemeinsame Hülle miteinander verbunden sein.

Der Fahrradhundekorb kann auch eine oder mehrere Trennwände aufweisen, die den Aufnahmeraum in mindestens zwei Bereiche untergliedern. Alternativ oder zusätzlich kann der Fahrradhundekorb auch mehrere Bodenelemente und umlaufende seitliche Wände aufweisen, durch die eine Mehrzahl an Aufnahmeräumen definiert werden. So können gleichzeitig in einem Fahrradhundekorb mehrere Haustiere transportiert werden. Durch eine räumliche Trennung der mehreren zu transportierenden Haustiere können diese besonders ruhig sein und nicht ungewollt miteinander interagieren, wodurch die Sicherheit während der Fahrt ebenfalls erhöht sein kann.

In weiterer vorteilhafter Ausgestaltung des Fahrradhundekorbs weist das Bodenelement des Fahrradhundekorbs ebenfalls einen Schaumstoffkern und eine Hülle auf. Das Bodenelement und die seitliche Wand können beispielsweise einen gemeinsamen Schaumstoffkern oder jeweils einzelne Schaumstoffkerne aufweisen. So können Stöße und Erschütterungen durch den Transport für das Haustier besonders effizient abgefedert und gedämpft werden. Insbesondere kann so ein gepolsterter bzw. gefederter Boden bzw. Bodenfläche für das zu transportierende Haustier bereitgestellt werden. Durch die damit verbundene Stressreduktion wird dem Haustier der Aufenthalt in dem Aufnahmeraum erleichtert und durch den bequemen Untergrund besonders angenehm gestaltet. Auch bei Unfällen kann so das Verletzungsrisiko für das Haustier gesenkt werden.

Insgesamt kann das Bodenelement konstruktiv identisch oder zumindest ähnlich zu der Wand ausgebildet sein. Insbesondere kann das Bodenelement alle bezüglich des Schaumstoffkerns und/oder der Hülle der seitlichen Wand geschilderten Merkmale, Eigenschaften und Vorteile aufweisen, und umgekehrt.

In weiterer vorteilhafter Ausgestaltung des Fahrradhundekorbs ist vorgesehen, dass der Schaumstoffkern der seitlichen Wand wenigstens teilweise für diese strukturell tragend ist. Alternativ oder zusätzlich kann der Schaumstoffkern des Bodenelements wenigstens teilweise für dieses strukturell tragend sein. So kann die zusätzliche Verwendung von Stützstrukturen, wie beispielsweise metallenen Gittern oder Stäben, reduziert oder sogar gänzlich auf diese verzichtet werden. Auf diese Weise wird das Verletzungsrisiko im Falle eines Aufpralls des Haustiers auf das Bodenelement und/oder die seitliche Wand für das Haustier minimiert. Gleichzeitig kann der Aufenthalt in dem Aufnahmeraum für das Haustier durch eine so vorhandene Schaumstoffpolsterung besonders angenehm gestaltet werden.

In weiterer vorteilhafter Ausgestaltung des Fahrradhundekorbs weist die seitliche Wand wenigstens zwei seitliche Teilbereiche und einen sich dazwischen erstreckenden vorderen und optional einen hinteren Teilbereich auf, welche jeweils einen Schaumstoffkern aufweisen. Der vordere Teilbereich kann bei Anbringung an das Fahrzeug in Fahrtrichtung nach vorne weisen, insbesondere bei Anbringung vorn am Fahrzeug. Die Orientierung bei Anbringung am Fahrzeug kann dabei durch Befestigungsmittel des Fahrradhundekorbs und/oder eine Befestigungsvorrichtung bzw. die vorgesehene Anbauweise vorgegeben sein. Beispielsweise können jeweilige Schnappverbindungen zum Anbringen am Lenker eines Fahrrads die Vorderseite des Fahrradhundekorbs definieren. Die seitlichen Teilbereiche können sich insbesondere im Wesentlichen orthogonal zu dem vorderen Teilbereich erstrecken, insbesondere nach hinten. Durch den vorderen Teilbereich und die zwei seitlichen Teilbereiche ist das zu transportierende Haustier besonders zuverlässig geschützt, da übliche Fahrradstürze in diese Richtung erfolgen. Die seitlichen Teilbereiche können ein Herausfallen und Aufschlagen des Haustiers auf den Boden bei einem Umfallen verhindern und der vordere Teilbereich bei einem Überschlag. Der hintere Teilbereich ist besonders vorteilhaft wenn der Fahrradhundekorb alternativ oder zusätzlich zur Anbringung hinten am Fahrrad ausgebildet ist, insbesondere bei einem hinteren Gepäckträger. Hier ist dann ebenfalls die Sicherheit bei einem Überschlag erhöht. Das Vorsehen sowohl eines hinteren als auch eines vorderen Teilbereichs ist besonders vorteilhaft, wenn der Fahrradhundekorb zur wahlweisen Anbringung vorne und hinten am Fahrrad ausgebildet ist.

Die Teilbereiche können dabei einstückig aus der Wand gebildet sein oder aber auch durch ein jeweiliges Wandelement. Beispielsweise kann im Fall eines rechteckigen Bodenelements die seitliche Wand vier Teilbereiche umfassen, die jeweils mit einer Kante an einer zugeordneten Kante des Bodenelements mit diesem verbunden sind, wobei jeder Teilbereich der seitlichen Wand bzw. jedes Wandelement einen Schaumstoffkern aufweist. Die Teilbereiche können miteinander verbunden sein, ohne beispielsweise im Aufnahmeraum Verdickungen im Bereich der Kanten bzw. Ränder jeweils zweier aneinander angrenzender Bereiche der seitlichen Wand aufzuweisen, wie es insbesondere im Fall eines die seitliche Wand zur Gänze und mit konstanter Dicke durchlaufenden Schaumstoffkerns auftreten kann. So kann ein Fahrradhundekorb mit großem Aufnahmeraum, der zudem besonders einfach zu reinigen ist, zur Verfügung gestellt werden.

In weiterer vorteilhafter Ausgestaltung des Fahrradhundekorbs weist wenigstens eine der Hüllen oder wenigstens ein Teilbereich einer der Hüllen oder der einzigen Hülle eine Steppung auf, welche gemeinsam mit dem Schaumstoffkern wenigstens teilweise strukturell tragend ist. Die Steppung kann dabei den jeweiligen Schaumstoffkern mit der jeweiligen Hülle beziehungsweise mit dem jeweiligen Bereich der Hülle verbinden. Dies kann insbesondere durch eine Steppung realisiert werden, die durch Schaumstoffkern und Hülle geht, sodass Schaumstoffkern und Hülle durch eine durchgehende Steppung oder Naht verbunden sind. Alternativ oder zusätzlich kann die Steppung auch einfach nur Vertiefungen und/oder Erhöhungen auf der Hülle ausbilden, insbesondere unter entsprechender Formgebung des Schaumstoffkerns, und so eine Federwirkung bzw. Polsterung verbessern. Die Steppung kann die tragende Struktur zusätzlich zum Schaumstoff beziehungsweise Schaumstoffkern verstärken. Dies ist besonders vorteilhaft, wenn der Fahrradhundekorb zum Transport größerer und schwerer Haustiere vorgesehen ist, da so die Verwendung weiterer stützender Strukturen, wie beispielsweise metallener Gitter oder Stäbe, reduziert oder vermieden werden kann, welche andernfalls auf Grund der Ausmaße des Fahrradhundekorbes gegebenenfalls erforderlich wären. Zudem kann eine Verschiebung der Hülle relativ zum Schaumstoffkern effektiv reduziert oder vermieden werden, da die Steppung Hülle und Schaumstoffkern in der vorgesehenen Positionierung relativ zueinander fixiert. Auch dies ist insbesondere bei besonders großen Körben und/oder besonders schweren Haustieren sehr vorteilhaft, da hier zum Beispiel im Falle ruckartiger Fahrzeugbewegungen oder starker Bremsvorgänge das Gewicht des Haustieres zumindest temporär zu einer Verschiebung der Hülle relativ zum Schaumstoffkern führen kann. Die dadurch auftretenden Materialbelastungen können so effektiv vermieden werden und das Risiko eines Reißens der Hülle reduziert werden.

In weiterer vorteilhafter Ausgestaltung des Fahrradhundekorbs ist vorgesehen, dass in der Steppung der Hülle zusätzlich Schaumstoff angeordnet ist, um das Bodenelement und/oder die seitliche Wand zu verstärken. Das Anordnen zusätzlichen Schaumstoffs in der Steppung der Hülle ist beispielsweise besonders vorteilhaft in den Steppungen der Hülle in den jeweiligen Kanten bzw. Rändern einander zugeordneter Bereiche der seitlichen Wand beziehungsweise des Bodenelements, da so die Formstabilität des Fahrradhundekorbes zusätzlich erhöht wird. Wird der zusätzliche Schaumstoff in der Steppung der Hülle in den Bereichen der Haupterstreckungsrichtung der seitlichen Wand und/oder des Bodenelements angeordnet, so kann dies die Formstabilität der seitlichen Wand beziehungsweise des Bodenelements zusätzlich erhöhen.

Die Steppung kann bevorzugt so ausgebildet sein, dass sie einen Hohlraum oder eine Auspaarung bildet, in dem/der zusätzlicher Schaumstoff angeordnet ist. Die Steppung kann dabei nur durch die Hülle gehen, durch die Hülle und den Schaumstoffkern, durch die Hülle und einen Teil des Schaumstoffkerns oder auch durch die Hülle zwischen zwei benachbarten Schaumstoffkernen. Der durch die Steppung gebildete Hohlraum kann beispielsweise durch eine innere Hüllenschicht ausgebildet werden, in welcher der Schaumstoffkern angeordnet ist, und eine äußere Hüllenschicht, wobei dann der zusätzliche Schaumstoff in dem Raum zwischen innerer und äußerer Hülle angeordnet ist.

Der zusätzliche Schaumstoff weist bevorzugt eine Dicke von 0,5 cm bis 2 cm, besonders bevorzugt von 0,7 cm bis 1,3 cm, und besonders stark bevorzugt von 1 cm auf und kann beispielsweise als Streifen ausgebildet sein, der in dem jeweiligen Hohlraum zwischen jeweiligen Steppnähten angeordnet ist. Die Höhe kann der Erstreckung in Hochrichtung entsprechen. Der zusätzliche Schaumstoff kann dabei eine Art Schaumstoffgestänge zum Stützen oder zusätzlichen Tragen der Struktur des Fahrradhundekorbs bilden. Auf diese Weise kann die Formstabilität des Fahrradhundekorbes besonders effektiv erhöht werden, so dass der Einsatz weiterer Stützstrukturen, wie beispielsweise schwerer Stäbe aus Metall oder Plastik, reduziert oder vermieden werden kann. Dadurch kann der Fahrradhundekorb besonders leicht sein und einfach herzustellen sein. Beispielsweise müssen in den Schaumstoffkern nicht aufwendig Hohlräume zur Aufnahme solcher Stützstrukturen gefertigt werden und die Stützstrukturen dann mühsam darin angeordnet werden.

In weiterer vorteilhafter Ausgestaltung des Fahrradhundekorbs ist vorgesehen, dass das Bodenelement und/oder die seitliche Wand ausschließlich durch den Schaumstoffkern und optional zusätzlich die Hülle, insbesondere deren Steppung, strukturell getragen ist. Alternativ oder zusätzlich kann der Fahrradhundekorb frei von weiteren strukturell tragenden Stützelementen sein. Insbesondere eine Ausgestaltung des Fahrradhundekorbes, die gänzlich frei von weiteren strukturell tragenden Stützelementen ist, wie beispielsweise Rahmen, Gestänge, Gitter und/oder tragende Bretter, ist wünschenswert, da so das Verletzungsrisko für das Haustier, insbesondere bei starken Erschütterungen oder ruckartigen Fahrzeugbewegungen im Verlauf des Transports mit einem Fahrrad, vor allem aber auch im Falle eines Unfalls effektiv reduziert werden kann. Auch der Fertigungsaufwand und das Gewicht des Fahrradhundekorbs können so besonders gering sein.

In weiterer vorteilhafter Ausgestaltung des Fahrradhundekorbs ist ferner vorgesehen, dass ein vorderer Teilbereich der seitlichen Wand höher als mindestens ein weiterer Teilbereich der seitlichen Wand ausgebildet ist. So kann der vordere Teilbereich der seitlichen Wand des Fahrradhundekorbes in Bezug auf das Bodenelement in Hochrichtung eine Höhe von maximal 50 cm, bevorzugt maximal 40 cm, und besonders bevorzugt maximal 30 cm aufweisen, während der weitere Teilbereich beispielsweise 5 cm niedriger, bevorzugt 10 cm niedriger und besonders bevorzugt mindestens 15 cm niedriger ist. Bevorzugt ist dabei der vordere Teilbereich der höchste Teilbereich und der weitere Teilbereich der niedrigste und/oder ein unmittelbar angrenzender Teilbereich. Ferner ist der vordere Teilbereich der seitlichen Wand bevorzugt bei Anbringung an einem Fahrrad oder einem anderweitigen zweirädrigen Fahrzeug in Fahrtrichtung vorne ausgebildet und begrenzt daher den Aufnahmeraum in Fahrtrichtung nach vorne. So kann dieser Bereich das Haustier in dem Aufnahmeraum wenigstens teilweise vor Fahrtwind schützen sowie zumindest teilweise einen Überschlagschutz und/oder Schutz gegen ein Herausschleudern im Falle eines Unfalls darstellen.

In weiterer vorteilhafter Ausgestaltung des Fahrradhundekorbs weist der Fahrradhundekorb ein Deckenelement auf, mittels welchem der Aufnahmeraum wenigstens teilweise in Hochrichtung begrenzt ist. Eine solche Ausgestaltung stellt einen besonders effektiven Schutz des Haustieres dar, sowohl vor Fahrtwind, Sonnenstrahlung und Regen als auch gegen Überschlag und Herausschleudern im Falle eines Unfalls. Insbesondere kann ein Deckenelement ein Herausfallen oder Herausschleudern des Haustiers in Hochrichtung aus dem Aufnahmeraum verhindern.

Das Deckenelement kann mit der seitlichen Wand einstückig ausgebildet sein, insbesondere mit einem Teilbereich und/oder einem einzelnen Wandelement oder als separates Element, das mit der seitlichen Wand verbunden ist. Vorzugsweise schließt das Deckenelement mit dem Bereich der seitlichen Wand ab, der beim Transport des Haustieres in Fahrtrichtung nach vorne weist und/oder der am höchsten ausgebildet ist, und ist besonders bevorzugt mit diesem einstückig ausgebildet. Insbesondere im Hinblick auf Fahrtwind ist hierbei hervorzuheben, dass das Deckenelement bevorzugt dergestalt ausgebildet ist, dass es nicht nur das Haustier in dem Aufnahmeraum unmittelbar schützt, sondern zudem der Fahrtwind so über das Deckenelement geleitet wird, dass insbesondere bei üblichen Fahrgeschwindigkeiten Wirbel vermieden werden, durch die der Fahrtwind andernfalls ebenfalls in den Aufnahmeraum eindringt.

Das Deckenelement kann dauerhaft oder lösbar mit der seitlichen Wand verbunden sein. Eine dauerhafte Verbindung kann besonders kostengünstig sein. Bei einer lösbaren Verbindung kann das Deckenelement beispielsweise je nach Wetter genutzt oder nicht genutzt werden. Bei gutem Wetter kann der Fahrradhundekorb so besonders leicht sein und bei schlechtem Wetter einen besonders guten Schutz für das Haustier bieten.

Das Deckenelement kann beispielsweise als Netz ausgebildet sein. Ferner kann das Deckenelement ähnlich oder identisch zu dem Bodenelement und/oder der seitlichen Wand ausgebildet sein, insbesondere hinsichtlich der Bauweise mit Hülle und Schaumstoffkern und optional Steppung. Insgesamt kann das Deckenelement konstruktiv identisch oder zumindest ähnlich zu der Wand und/oder dem Bodenelement ausgebildet sein. Insbesondere kann das Deckenelement alle bezüglich des Schaumstoffkerns und/oder der Hülle der Wand und/oder des Bodenelements geschilderten Merkmale, Eigenschaften und Vorteile aufweisen, und umgekehrt. Das Deckenelement kann insbesondere den Schaumstoffkern umfassen, der wenigstens teilweise für dieses strukturell tragend ist. Das Deckenelement wird somit bevorzugt durch den Schaumstoffkern und optional zusätzlich die Hülle, insbesondere deren Steppung, strukturell getragen und ist besonders bevorzugt frei von weiteren Stützstrukturen wie Stäben oder Gestängen. Dadurch kann der Aufprall des Haustieres im Falle eines Unfalls auch bei einem Überschlag abgefedert und gedämpft werden ohne dass ein zusätzliches Verletzungsrisiko durch weitere Stützstrukturen gegeben ist.

In weiterer vorteilhafter Ausgestaltung des Fahrradhundekorbs umfasst der Fahrradhundekorb ein Verschlusselement, welches zwischen einer Offenstellung, in welcher der Aufnahmeraum zugänglich ist, und einer Schließstellung, in welcher der Aufnahmeraum, insbesondere dessen Zugangsöffnung, verschlossen ist, verstellbar ist. So kann der sichere Verbleib des Haustieres während des Transportes gewährleistet werden, da das Haustier den Aufnahmeraum nicht selbstständig verlassen kann. Das Verschlusselement kann dabei auch als Deckenelement fungieren und/oder ausgebildet sein, wenn es in Hochrichtung gegenüberliegend dem Bodenelement angeordnet ist.

Je nach Stellung des Verschlusselements ist der Aufnahmeraum durch eine Zugangsöffnung entweder zugänglich oder verschlossen. Die Zugangsöffnung kann beispielsweise einem Teilbereich der umlaufenden Kante des Bodenelements entsprechen, an dem kein Teilbereich der Wand angeordnet ist. Ist die seitliche Wand also nur bereichsweise das Bodenelement umlaufend ausgebildet, so kann die Zugangsöffnung durch die Kante des Bodenelements, an die die seitliche Wand nicht anschließt, sowie die sich von dieser Kante orthogonal in Hochrichtung nach oben erstreckenden Kanten bzw. Ränder der angrenzenden Teilbereiche der seitlichen Wand und optional der daran anschließenden und diese verbindenden Kante des Deckenelements definiert sein. Ist die seitliche Wand vollständig das Bodenelement umlaufend ausgebildet, so kann die Zugangsöffnung durch den Teilbereich der seitlichen Wand definiert sein, der eine geringere Höhe im Vergleich zu den übrigen Teilbereichen der seitlichen Wand aufweist, sowie die Bereiche der sich darüber hinaus in Hochrichtung seitlich erstreckenden Kanten bzw. Ränder angrenzender höherer Teilbereiche der seitlichen Wand und optional der daran anschließenden und diese verbindenden Kante des Deckenelements. Außerdem kann die Zugangsöffnung auch durch eine obere, dem Bodenelement gegenüberliegende Öffnung zusätzlich teilweise gebildet sein oder auch vollständig, insbesondere im Falle einer durchgehend vollständig umlaufenden Wand mit einheitlicher Höhe.

Das Verschlusselement kann bevorzugt in Form eines Netzes und/oder mit Luftdurchlässen ausgebildet und bevorzugt lösbar, beispielsweise mittels eines Reißverschlusses, Klettverschlusses und/oder Druckknöpfen an der seitlichen Wand, dem Deckenelement und/oder dem Bodenelement befestigbar sein. Dadurch ist Blickkontakt zwischen Haustier und Haustierbesitzer auch dann gewährleistet, wenn das Verschlusselement in Schließstellung ist. So ist der Verbleib des Haustieres in dem Aufnahmeraum sichergestellt, wodurch die Aufsicht bedeutend erleichtert wird, aber dennoch ein Eingreifen des Haustierbesitzers zum Beispiel zum Beruhigen des Haustieres jederzeit ermöglicht. Das Verschlusselement kann aber auch beispielsweise durch ein durchgehendes biegeschlaffes Element ausgebildet sein, optional mit Luftdurchlässen, um einen Sonnen- und/oder Regenschutz zu bieten. Dabei kann das Verschlusselement bevorzugt einstückig als Verlängerung einer Hülle ausgebildet sein, wodurch der Fahrradhundekorb besonders kostengünstig sein kann.

Das Verschlusselement kann ferner einen Durchlass und/oder eine Versteifung aufweisen. Ein Durchlass im Verschlusselement kann parallel zu einer Haupterstreckungsrichtung des Verschlusselements mittig in oder an dem Verschlusselement angeordnet sein. Der Durchlass kann beispielsweise als länglicher oder U-förmiger Schlitz ausgebildet sein oder eine rechteckige Grundform aufweisen. Die Begrenzungen des Durchlasses können beispielsweise als Reißverschluss oder Klettverschluss und/oder mit Druckknöpfen ausgebildet sein und dadurch lösbar miteinander befestigbar sein. Dadurch kann der Durchlass geöffnet und verschlossen werden. Durch den Durchlass kann das Haustier in den Aufnahmeraum hinein- oder hinausgelangen. Dies ist besonders vorteilhaft, wenn das Verschlusselement nicht lösbar an der seitlichen Wand befestigbar ist. Eine im Verschlusselement angeordnete Versteifung kann beispielsweise als runde oder flache Stange oder als Draht ausgebildet sein. Geeignete Materialien sind beispielsweise Kunststoff oder Metall. Bevorzugt ist die Versteifung flexibel ausgebildet, wodurch sich diese gut an gerundete Formen anpassen kann und besonders robust gegen Beschädigungen, wie Brüche, ist. Die Versteifung kann parallel zu der Haupterstreckungsrichtung des Verschlusselements mittig an oder in dem Verschlusselement angeordnet sein. Dies hat den Vorteil, dass das Verschlusselement verstärkt wird und ein Durchhängen verhindert wird, was sonst den Aufnahmeraum verkleinern und dadurch das sich darin befindliche Haustier und/oder dessen Bewegungsfreiheit einschränken könnte. Das Verschlusselement kann auch sowohl den Durchlass als auch die Versteifung aufweisen. In diesem Fall kann die Versteifung parallel zum Durchlass und in mindestens einer der Begrenzungen oder unmittelbarer Nähe zu mindestens einer der Begrenzungen des Durchlasses angeordnet sein. Durch eine solche Anordnung wird ein Durchhängen der Begrenzungen des Durchlasses besonders effektiv reduziert und die Nutzung des Durchlasses beispielsweise zum Einbringen des Haustieres in den Aufnahmeraum vereinfacht.

Der Fahrradhundekorb kann ferner beispielsweise Reflektoren und/oder reflektierende Markierungen, wie beispielsweise Bedruckungen, umfassen, die zum Beispiel in oder an der Hülle befestigt sein können. Derartige Elemente erstrecken sich jeweils über maximal 10 %, bevorzugt maximal 5 % und besonders bevorzugt maximal 2 % der Außenseite des Bodenelements und/oder der seitlichen Wand, optional des Deckenelements. Diese Reflektoren und/oder reflektierenden Markierungen haben bevorzugt keine formstützende Funktion, bieten jedoch Schutz vor anderen Verkehrsteilnehmern, insbesondere bei Bedingungen mit erschwerter Sicht, wie beispielsweise Nebel oder Dunkelheit.

In weiterer vorteilhafter Ausgestaltung des Fahrradhundekorbs umfasst der Fahrradhundekorb wenigstens eine Anschnallvorrichtung zum lösbaren Fixieren des Haustiers in dem Aufnahmeraum, wobei die Anschnallvorrichtung insbesondere zum lösbaren Fixieren eines Halsbands und/oder eines Brustgeschirrs des Haustiers ausgebildet ist. Die Anschnallvorrichtung kann dafür beispielsweise Ösen und/oder Karabiner umfassen. Die Anschnallvorrichtung kann an dem Bodenelement und/oder der seitlichen Wand verankert sein, beispielsweise im Schaumstoffkern und/oder durch Vernähen mit der Hülle und/oder einer Steppung. Die Anschnallvorrichtung ist bevorzugt so verankert, dass sie in Richtung Haustierbesitzer weist, wenn der Fahrradhundekorb an einem zweirädrigen Fahrzeug befestigt ist. Die Verankerung der Anschnallvorrichtung kann sich beispielsweise über maximal 20 %, bevorzugt maximal 10 % und besonders bevorzugt maximal 3 % der Bodenfläche parallel zu der Haupterstreckungsrichtung des Bodenelements erstreckend und hat vorzugsweise keine strukturell tragende Funktion für jeweilige den Aufnahmeraum begrenzende Elemente. Das Haustier kann mittelbar mit der Anschnallvorrichtung beispielsweise über eine Leine oder Kurzleine in dem Aufnahmeraum fixiert werden. Dadurch kann der Bewegungsspielraum des Haustieres verringert werden, wodurch Beeinträchtigungen der Fahrt durch Bewegungen des Haustieres vermieden werden. Zudem kann das Haustier im Falle eines Unfalls vor dem Herausschleudern aus dem Aufnahmeraum geschützt werden.

In weiterer vorteilhafter Ausgestaltung des Fahrradhundekorbs umfasst der Fahrradhundekorb eine Regenhülle und weist optional einen Aufbewahrungsraum zum Verstauen der Regenhülle auf. Die Regenhülle ist bevorzugt aus einem wasserabweisenden Material gebildet, beispielsweise einer Kunststofffolie oder Membran, wie Gore-Tex. Die Regenhülle kann in ihrer Form und Größe an den Fahrradhundekorb angepasst sein. Beispielsweise kann die entfaltete und über den Korb gezogene Regenhülle eine Größe und Form aufweisen, welche ein außenseitiges Bedecken der kompletten Oberseite des Fahrradhundekorbs und optional zusätzlich eines oberen Teils der seitlichen Wand oder der kompletten seitlichen Wand und/oder eines vorderen Teils des Bodenelements oder des kompletten Bodenelements ermöglicht. Dabei können Aussparungen und/oder Durchgangslöcher für die Befestigung des Korbs an einem Fahrrad bzw. eine Befestigungsvorrichtung des Fahrradhundekorbs vorgesehen sein. Die Regenhülle kann Luftlöcher umfassen, so dass ein angenehmes Klima für das sich im Fahrradhundekorb befindliche Haustier sichergestellt werden kann.

Die Regenhülle kann nach Art einer Regenhülle für einen Rucksack außen an dem Fahrradhundekorb dauerhaft, bevorzugt jedoch lösbar befestig werden. Beispielsweise kann die Regenhülle zur Fixierung bei Benutzung einen Gummizug umfassen. In Benutzung kann die Regenhülle wenigstens die Zugangsöffnung, die seitliche Wand, das Deckenelement und/oder die dem Aufnahmeraum gegenüberliegende und damit nach außen gewandte Seite des Bodenelements zumindest teilweise bedecken und dadurch den Aufnahmeraum gänzlich oder zumindest teilweise vor Nässe schützen.

Die Regenhülle kann in dem Aufbewahrungsraum angeordnet sein bzw. werden, wenn sie nicht in Benutzung ist. Ein solcher Aufbewahrungsraum kann als insbesondere außenseitige Aussparung in der seitlichen Wand, dem Deckenelement und/oder dem Bodenelement ausgebildet sein. Außenseitig bezieht sich dabei auf den Aufbewahrungsraum, insbesondere eine dem Aufnahmeraum nicht zugewandte Seite. Der Aufbewahrungsraum kann beispielsweise durch eine Aussparung im Schaumstoffkern gebildet sein, die optional durch die Hülle ausgekleidet und/oder außenseitig ist, wobei die Hülle einstückig mit der äußeren und/oder der inneren Hülle ausgebildet sein kann oder als separate Hülle, welche mit der äußeren und/oder der inneren Hülle verbunden ist. Der Aufbewahrungsraum kann auch durch einen innenseitigen oder außenseitigen Beutel gebildet sein, insbesondere aber auch als außenseitige Aussparung ausgebildet sein. Durch den Aufbewahrungsraum kann der Nutzer die Regenhülle an oder in dem Fahrradhundekorb lagern und diese einfach zur Benutzung hervorziehen. Insbesondere bei einer außenseitigen Aufbewahrung kann die Regenhülle zur Nutzung hervorgeholt werden, ohne das in dem Aufnahmeraum befindliche Haustier zu stören.

Bevorzugt ist die Aussparung mittels eines Abdeckelements verschließbar. Das Abdeckelement kann durch einen Teil der Hülle gebildet sein, indem die Hülle beispielsweise geschlitzt und verschließbar, beispielsweise mit einem Klettverschluss, Reißverschluss oder Druckknopf, ausgebildet ist. So ist sichergestellt, dass die Regenhülle weder in den Aufnahmeraum ragt und dadurch den dem Haustier zur Verfügung stehenden Raum reduziert noch aus dem Fahrradhundekorb ragt und unter Umständen in die Speichen des Fahrradrades gerät oder anderweitig den Haustierbesitzer beim Fahren behindert.

In weiterer vorteilhafter Ausgestaltung des Fahrradhundekorbs ist vorgesehen, dass der Fahrradhundekorb zwischen einer Transportkonfiguration und einer Deckenkonfiguration verstellbar ist. Als Transportkonfiguration wird hierbei eine Konfiguration des Fahrradhundekorbs bezeichnet, in welcher der Aufnahmeraum vorhanden ist und der Fahrradhundekorb an dem Fahrrad befestigbar ist, wohingegen Deckenkonfiguration eine Konfiguration des Fahrradhundekorbs bezeichnet, in welcher wenigstens das Bodenelement und ein Teilbereich, insbesondere wenigstens ein Wandelement, der seitlichen Wand im Wesentlichen flach vorzugsweise nebeneinander ausgebreitet sind. Dafür kann die Wand, insbesondere der Teilbereich der seitlichen Wand und/oder das Wandelement, beweglich an dem Bodenelement angebracht sein. Dies hat den Vorteil, dass der Haustierbesitzer keine weiteren Gegenstände mit sich führen muss, um dem Haustier vor und/oder nach dem Transport eine bequeme Liegefläche zu bieten, wie beispielsweise eine Decke oder ein Körbchen.

In der Deckenkonfiguration bilden jeweilige Wandungen des Fahrradhundekorbes eine Art ausgebreiteter Decke. Ist beispielsweise wenigstens ein Teilbereich der seitlichen Wand gelenkig mit dem Bodenelement verbunden, so kann der jeweilige Teilbereich von einer Stellung, in der er bevorzugt orthogonal zur durch die Haupterstreckungsrichtung des Bodenelements definierte Fläche steht, in eine im Wesentlichen parallele Stellung gebracht werden, sodass der jeweilige Teilbereich der seitlichen Wand und das Bodenelement bevorzugt eine im Wesentlichen ebene Fläche bilden. Der Teilbereich der seitlichen Wand, der gelenkig mit dem Bodenelement verbunden ist, ist mit diesem bevorzugt gelenkig an einander zugewandten Kanten bzw. Rändern befestigt. Ferner kann optional auch das Deckenelement und/oder das Verschlusselement flach ausgebreitet werden, beispielsweise ebenfalls mittels einer gelenkigen Verbindung zu einem Teilbereich der seitlichen Wand. Dadurch kann eine Liegefläche weiter vergrößert werden.

Der Fahrradhundekorb kann auf verschiedene Weise von der Transportkonfiguration in die Deckenkonfiguration verstellt werden. Beispielsweise kann die seitliche Wand mindestens zwei Teilbereiche oder Wandelemente aufweisen, die an jeweiligen einander zugewandten Kanten bzw. Rändern zum Beispiel mittels eines Reißverschlusses lösbar aneinander befestig sind, wobei die Kanten bzw. Ränder bevorzugt orthogonal zur durch die Haupterstreckungsrichtung des Bodenelements definierten Fläche verlaufen und sich über die gesamte Höhe der seitlichen Wand an der jeweiligen Stelle erstrecken. Nach dem Lösen der Wandelemente voneinander können diese aufgefaltet werden, wodurch der Fahrradhundekorb von der Transportkonfiguration in die Deckenkonfiguration verstellt werden kann. In der Deckenkonfiguration ist der Fahrradhundekorb gegebenenfalls nicht mehr an einem zweirädrigen Fahrzeug befestigbar, so dass er für den Transport eines Haustieres durch Hochklappen der Wandelemente und erneutes Befestigen jeweiliger Wandelementkanten bzw. -ränder zunächst wieder in die Transportkonfiguration verstellt werden muss.

In weiterer vorteilhafter Ausgestaltung des Fahrradhundekorbs umfasst der Fahrradhundekorb eine Befestigungsvorrichtung, mittels welcher der Fahrradhundekorb an einem Fahrrad befestigbar ist. Es kann damit vorgesehen sein, dass der Fahrradhundekorb an einem Gepäckträger und/oder an einer Vorderseite des Fahrrads befestigbar ist, insbesondere nach Art eines Fahrradkorbs und bevorzugt lösbar. Ferner ist der Fahrradhundekorb bevorzugt lösbar an dem Fahrrad befestigbar. So kann der Fahrradhundekorb so befestigt werden, dass eine von Größe und/oder Gewicht unabhängig uneingeschränkte Fahrweise des Haustierbesitzers ermöglicht wird.

Die Befestigungsvorrichtung kann zum Beispiel Halterungen für die Befestigung von Fahrradkörben an Gepäckträgern und/oder Rahmenteilen eines Fahrrads umfassen. Beispielsweise kann die Befestigungsvorrichtung jeweilige Spannelemente, Schnappverbindungen, Schrauben und/oder Klemmvorrichtungen umfassen. Vorzugsweise ist die Befestigungsvorrichtung dabei so ausgelegt, dass sich der Fahrradhundekorb auch bei darin aufgenommenem Haustier und Sturz mit einem Fahrrad nicht von dem Fahrrad löst und sich kaum oder gar nicht relativ zum Fahrrad bewegt.

Der Fahrradhundekorb kann zum Beispiel an einem Lenkrohr, einem Lenker, einer Lenkstange, mittels einer Vorrichtung auf dem in Fahrtrichtung vorderen Bereich des Fahrradgestells oder auf einem Frontgepäckträger befestigt werden. Dies hat den Vorteil, dass der Haustierbesitzer das Haustier im Blick hat, rasch auf eine Veränderung im Verhalten des Haustieres oder in seinen Bewegungen reagieren kann und damit die Aufsicht erleichtert wird. Der Blickkontakt wirkt sich zudem beruhigend auf das Haustier aus. Insbesondere bei größeren und/oder schwereren Haustieren ist es jedoch gegebenenfalls vorteilhaft, den Fahrradhundekorb in Fahrtrichtung hinten an dem Fahrrad zu befestigen, beispielweise an einem Heckgepäckträger. Auf diese Weise beeinträchtigen weder stärkere Bewegungen noch das Gewicht des Haustieres die Fahrweise des Haustierbesitzers, da nicht unmittelbar die Lenkung des Fahrzeuges beeinflusst wird, wie dies bei einer Anbringung des Fahrradhundekorbes im in Fahrtrichtung vorderen Bereich des Fahrrades der Fall sein kann.

Der Fahrradhundekorb ist dabei bevorzugt mittels einer Befestigungsvorrichtung, wie beispielsweise durch mindestens ein Spannelement, eine Schraube, eine Clip-Verbindung oder eine Kombination hiervon, an dem Fahrzeug befestigt. Dies ermöglicht eine sichere und zugleich leicht durchzuführende Anbringung des Fahrradhundekorbes an einem Fahrrad. Der Fahrradhundekorb ist bevorzugt lösbar an dem Fahrrad befestigt, so dass der Fahrradhundekorb abgenommen werden kann, wenn das Fahrrad abgestellt wird. Dies stellt zum Einen einen Schutz des Fahrradkorbes vor längerer Einwirkung der Witterung dar, beispielsweise wenn das Fahrrad nur temporär genutzt wird und in der Zwischenzeit nicht an einem überdachten Platz abgestellt werden kann, sowie zum Anderen einen Schutz vor Diebstahl. Diesbezüglich kann der Fahrradhundekorb alternativ oder zusätzlich eine Vorrichtung zum Sichern des Fahrradhundekorbes an dem Fahrrad aufweisen, wie beispielsweise ein Schloss. Dies kann besonders vorteilhaft sein, wenn das Fahrzeug für gewisse Zeit ohne Aufsicht abgestellt werden muss und es für den Haustierbesitzer angenehmer ist, wenn der Fahrradhundekorb währenddessen am Fahrrad befestigt bleibt. Zudem kann es für den Haustierbesitzer vorteilhaft sein, wenn er den Fahrradhundekorb abnehmen kann und das Haustier so in dem Fahrradhundekorb verbleiben kann. Durch die Bauweise mit Schaumstoffkern und Hülle ist der Fahrradhundekorb dabei auch angenehm zu tragen, insbesondere da auch ein Kontakt mit dem Träger durch den Schaumstoffkern gepolstert sein kann. Beispielsweise kann der Fahrradhundekorb so auch weiter genutzt werden, wenn ein Wechsel des Transportmittels nötig ist oder das Haustier beispielsweise in ein Geschäft, zum Tierarzt oder zu anderen Personen mitgenommen werden soll.

In weiterer vorteilhafter Ausgestaltung des Fahrradhundekorbs umfasst der Fahrradhundekorb wenigstens ein Trageelement zum Transportieren des Fahrradhundekorbs, wenn dieser nicht an einem Fahrrad oder einem anderen zweirädrigen Fahrzeug befestigt ist. Hierbei kann das wenigstens eine Trageelement so ausgebildet sein, dass ein Haustier auch in dem Aufnahmeraum des Fahrradhundekorbes transportiert werden kann, wenn der Fahrradhundekorb mittels des wenigstens einen Trageelements getragen wird. Trageelemente, wie beispielsweise Schultergurte oder Trageriemen, können bevorzugt an einem dem Bodenelement entgegengesetzten Endbereich der seitlichen Wand und/oder an dem Bodenelement dauerhaft oder lösbar befestigt sein, vorzugsweise außerhalb des Aufnahmeraums. Eine unlösbare Befestigung kann die Produktionskosten verringern, wohingegen eine lösbare Befestigung eine größere Flexibilität bezüglich des Trageelements ermöglichen kann, einschließlich eines situationsbedingten Austausches und/oder Abnehmens des Trageelements. Eine solche lösbare Befestigung kann beispielsweise durch einen Karabiner oder eine Clipsverbindung ausgebildet sein. Das Tragelement kann an mindestens einem der seitlichen Wandbereiche befestigt sein. So kann beispielsweise bei einer rechteckigen Grundform des Bodenelements ein Schultergurt an zwei gegenüberliegenden Teilbereichen der seitlichen Wand befestigt sein und/oder je ein Tragriemen an je einem von zwei gegenüberliegenden Teilbereichen der seitlichen Wand. Dadurch kann der Fahrradhundekorb nach Art einer Umhängetasche über die Schulter oder nach Art einer Einkaufstasche in der Hand bequem transportiert werden. Eine Befestigungsopposition kann aber auch gewechselt werden, um das mindestens eine Trageelement dann beispielsweise auch an dem Bodenelement zu befestigen. So kann beispielsweise ein Schultergurt an dem Bodenelement befestigbar sein, der sich wie bei einer Umhängetasche zum Beispiel diagonal über eine rechteckige Bodenplatte erstreckt, oder es können beispielsweise zwei Trageelemente so an dem Bodenelement befestigbar sein, dass der Hundefahrradkorb bequem nach Art eines Rucksackes getragen werden kann. Das mindestens eine Trageelement kann ferner optional eine Vorrichtung zur Verstellung der Länge des Trageelements aufweisen. Dadurch kann das Trageelement optimal auf die Person eingestellt werden, die den Fahrradhundekorb transportiert, beispielsweise auf deren Körpergröße oder die gewünschte Position des Fahrradhundekorbes am Körper. Die Trageelemente können somit den Transport des Fahrradhundekorbes bedeutend erleichtern, wenn dieser nicht an einem Fahrrad oder einem anderen zweirädrigen Fahrzeug befestigt ist.

In weiterer vorteilhafter Ausgestaltung des Fahrradhundekorbs umfasst der Fahrradhundekorb zwei Trageelemente zum Transportieren des Fahrradhundekorbs nach Art eines Rucksackes. Hierbei können die zwei Trageelemente jeweils nach Art eines Rucksacktragegurts ausgebildet sein, insbesondere als biegeschlaffe Tragegurte, optional mit zumindest teilweiser Polsterung. Die Trageelemente können beispielsweise also auch als Tragegurt oder Trageriemen bezeichnet werden oder ausgebildet sein. Dies erlaubt ein komfortables Tragen des Fahrradhundekorbes nach Art eines Rucksackes. Die zwei Trageelemente sind bevorzugt an dem Bodenelement außerhalb des Aufnahmeraums, insbesondere lösbar, befestigt. Insbesondere können die Trageelemente an einer dem Aufnahmeraum abgewandten Seite des Fahrradhundekorbs befestigt sein, beispielsweise an der seitlichen Wand und/oder dem Bodenelement. Bevorzugt sind die zwei Trageelemente an vier voneinander beabstandeten Stellen des Bodenelements befestigt, welche vorzugsweise ein Rechteck ausbilden, welches bevorzugt im Wesentlichen zentriert in Bezug auf die Fläche des Bodenelements angeordnet ist. Die zwei Tragegurte können an dem Bodenelement im Wesentlichen parallel zueinander und bevorzugt in einem Abstand von 40 cm bis 70 cm, besonders bevorzugt von 45 cm bis 60 cm, zueinander angeordnet sein. Parallel zueinander kann dabei dadurch definiert sein, dass sich die Trageelemente parallel erstrecken können, beispielsweise in einem gespannten oder ungespannten Zustand. Parallel kann auch durch eine Parallelität der beiden Verbindungslinie der zwei Befestigungsstellen der beiden Trageelemente definiert sein. Der geschilderte Abstand kann im Wesentlichen einer durchschnittlichen Schulter- und/oder Hüftbreite entsprechen, womit eine solche Ausgestaltung den Tragekomfort beim Transport eines Haustieres mittels des Fahrradhundekorbes nach Art eines Rucksackes besonders erhöht.

Der Fahrradhundekorb kann beispielsweise ein Bodenelement mit rechteckiger Grundform aufweisen. In diesem Fall können die zwei Tragegurte jeweils an zwei unterschiedlichen Eckbereichen des Bodenelements befestigt sein, so dass die zwei Trageriemen im Wesentlichen parallel zueinander und zu zwei gegenüberliegenden Kanten des Bodenelementes ausgerichtet sind. Dies ermöglicht einen komfortablen und zugleich stabilen Transport des Haustieres mittels des Fahrradhundekorbes nach Art eines Rucksackes auf dem Rücken.

Optional kann der Fahrradhundekorb ein Verbindungsmittel aufweisen, mittels welchem die zwei Tragriemen bzw. Trageelemente lösbar miteinander gekoppelt werden können, insbesondere in einem Mittelbereich und/oder Brustbereich beim Tragen nach Art eines Rucksacks. Beispielsweise kann das Verbindungsmittel eine Clipsverbindung bereitstellen oder als solche ausgebildet sein. Dies ermöglicht ein Fixieren der Beabstandung der zwei Tragegurte beim Tragen des Fahrradhundekorbes nach Art eines Rucksackes vorne auf der Brust des Trägers und kann dadurch ein Herunterrutschen eines jeweiligen Trageriemens von der Schulter verhindern sowie und die Position des Fahrradhundekorbes auf dem Rücken stabilisieren.

Zusätzlich oder alternativ können die zwei Trageriemen jeweils an zwei gegenüberliegenden Eckbereichen des Bodenelements befestigt sein, so dass die zwei Trageriemen einander überkreuzend und/oder im Wesentlichen diagonal angeordnet sind. Dies erhöht, insbesondere bei großen und/oder schweren Haustieren, die Stabilität der Positionierung des Fahrradhundekorbes auf dem Rücken, wenn dieser zum Transport des Haustieres nach Art eines Rucksackes verwendet wird.

Der Fahrradhundekorb kann auch so ausgebildet sein, dass die Befestigung der Trageriemen bzw. Trageelemente geändert werden kann, um zwischen der gekreuzten und parallelen Anordnung zu wechseln. Dafür kann die Befestigung der Trageelemente beispielsweise lösbar sein oder die Trageelemente können jeweils zwei trennbare Teile aufweisen, welche in unterschiedlichen Konfigurationen miteinander koppelbar sind.

Wird ein Haustier mittels des Fahrradhundekorbes nach Art eines Rucksackes auf dem Rücken transportiert, so ist die Orientierung des Fahrradhundekorbes beispielsweise bevorzugt um circa 90° zur Orientierung des Fahrradhundekorbes bei Anbringung auf einem zweirädrigen Fahrzeug, insbesondere einem Fahrrad, wie zuvor beschrieben, gedreht. Wird der Fahrradhundekorb nach Art eines Rucksackes verwendet, so begrenzt das Bodenelement beispielsweise zumindest teilweise den Aufnahmeraum in einer seitlichen Richtung und bildet somit eine Seitenfläche des Aufnahmeraums aus, welche während des Transportes bevorzugt parallel und zum Rücken des Trägers weisend ausgerichtet ist. Die seitliche Wand steht bevorzugt in horizontaler Richtung vom Bodenelement ab und gibt so die Tiefe des Fahrradhundekorbes vor, wenn dieser als Rucksack getragen wird. Entsprechend kann wenigstens ein Teilbereich der seitlichen Wand bei der Nutzung des Fahrradhundekorbs als Rucksack einen Boden bzw. eine Bodenfläche bilden bzw. den Aufnahmeraum in Hochrichtung nach unten begrenzen.

Der Fahrradhundekorb weist bevorzugt einen vorderen Teilbereich der seitlichen Wand auf, welcher höher als mindestens ein weiterer Teilbereich der seitlichen Wand ist. Beim Transport eines Haustieres mittels des Fahrradhundekorbes nach Art eines Rucksackes begrenzt dieser vordere Teilbereich vorzugsweise den Aufnahmeraum nach unten und bildet somit eine Bodenfläche des Aufnahmeraums aus, welche während des Transportes bevorzugt im Wesentlichen horizontal ausgerichtet ist. Beim Tragen des Haustieres mittels des Fahrradhundekorbs nach Art eines Rucksackes stellt dieser Teilbereich der seitlichen Wand eine Sitz- und/oder Liegefläche für das Haustier bereit. Somit stellt dieser Bereich nicht nur zumindest teilweise einen Überschlagschutz und/oder Schutz gegen ein Herausschleudern des Haustieres im Falle eines Unfalls bei einem Transport auf einem Fahrrad dar, sondern ermöglicht ferner eine besonders große Liege- und/oder Sitzfläche für das Haustier bei dessen Transport mittels der zwei Trageelemente nach Art eines Rucksackes.

Der Fahrradhundekorb kann ferner ein Deckenelement aufweisen, mittels welchem der Aufnahmeraum beim Tragen des Fahrradhundekorbes nach Art eines Rucksackes wenigstens teilweise in Transportrichtung nach hinten und damit als Seitenelement begrenzt ist. Auf diese Weise kann ein Herausspringen und/oder ein Herausfallen des Haustieres während eines Transportes nach Art eines Rucksackes verhindert werden. Überdies wird beim Transport des Fahrradhundekorbes nach Art eines Rucksackes durch das Deckenelement, den vorderen Teilbereich der seitlichen Wand, das Bodenelement und/oder den seitlichen Teilbereichen der seitlichen Wand eine Mulde ausgebildet, welche eine bequeme Lagerung des Haustieres beim Transport erlaubt. Weisen zumindest der vordere Teilbereich der seitlichen Wand sowie optional das Deckenelement einen Schaumstoffkern und eine Hülle, bevorzugt mit Steppung, als strukturell tragende Elemente auf, so ist die Lagerung für das Haustier bei einem Transport mittels des Fahrradhundekorbes nach Art eines Rucksackes besonders bequem. Dies wirkt sich beruhigend auf das zu transportierende Haustier aus und erhöht dadurch den Tragekomfort.

Optional kann ferner ein Verschlusselement vorgesehen sein, welches bevorzugt dem Bodenelement beim Transport des Fahrradhundekorbes nach Art eines Rucksackes in horizontaler Richtung gegenüberliegend angeordnet ist und auf diese Weise auch als Seitenelement fungieren und/oder ausgebildet sein kann, welches den Aufnahmeraum wenigstens teilweise in Transportrichtung nach hinten begrenzt. Eine derartige Ausgestaltung des Fahrradhundekorbes erlaubt es dem Haustier beim Transport die Umgebung zu beobachten. Gleichzeitig kann der Aufnahmeraum des Fahrradhundekorbs so auch bei Nutzung als Rucksack verschlossen werden, damit das Haustier sicher im Aufnahmeraum verbleibt. Ferner kann der Fahrradhundekorb optional einen niedrigeren Teilbereich der seitlichen Wand aufweisen, welcher beim Tragen des Fahrradhundekorbes nach Art eines Rucksackes bevorzugt in Hochrichtung oben vorgesehen ist. Eine solche Ausgestaltung erleichtert das Einbringen des Haustieres in den Fahrradhundekorb sowie das Herausholen des Haustieres aus dem Fahrradhundekorb.

In weiterer vorteilhafter Ausgestaltung des Fahrradhundekorbs umfasst der Fahrradhundekorb zusätzlich zu dem mindestens einen Trageelement eine Tragepolsterung, welche hier auch als Polsterung bezeichnet werden kann. Insbesondere wenn das mindestens eine Trageelement am Bodenelement befestigt ist oder befestigbar ist, weist das Bodenelement an der dem Aufnahmeraum abgewandten Seite bevorzugt eine Polsterung auf. Beim Tragen nach Art eines Rucksacks wird so ein Rückenpolster für den Träger bereitgestellt, welches zudem eine Belüftung und damit ein angenehmes Klima beim Tragen bereitstellen kann, beispielsweise indem die Polsterung luftdurchlässig ausgebildet ist. Besonders geeignet ist dabei eine Polsterung, welche ein Abstandsgewirk umfasst oder aus diesem besteht. Das Abstandsgewirk ist besonders leicht und luftdurchlässig und kann zudem im Falle eines Sturzes eine zusätzliche Polsterung zum Schutz des Haustiers bereitstellen. Die Polsterung kann ein- oder mehrstückig ausgebildet sein. So kann die Polsterung auch beispielsweise aus Schaumstoff bestehen oder Schaumstoff umfassen und auf der dem Aufnahmeraum entgegengesetzten Seite der Bodenplatte angeordnet sein. Optional oder zusätzlich kann die Polsterung mit dem Bodenelement oder Teilen hiervon, insbesondere dem Schaumstoffkern ein- oder mehrstückig ausgebildet sein. In allen Fällen kann die Polsterung die gesamte Bodenplatte bedecken oder Teile davon. Bevorzugt erstreckt sich die Polsterung insgesamt über mindestens 30 %, besonders bevorzugt über mindestens 50 % und besonders bevorzugt über mindestens 75 % einer Grundfläche des Bodenelements. Eine Polsterung kann den Druck des Hundefahrradkorbes sowie des sich gegebenenfalls in dessen Aufnahmeraum befindlichen Haustieres gegen den Körper des Trägers dämpfen, wenn der Hundefahrradkorb nach Art beispielsweise einer Umhängetasche oder eines Rucksackes transportiert wird.

In weiterer vorteilhafter Ausgestaltung des Fahrradhundekorbs umfasst der Fahrradhundekorb eine Heizvorrichtung. Fahrtwind sowie tiefere Außentemperaturen und/oder feuchte Witterung können dazu führen, dass insbesondere in Herbst und Winter das sich im Aufnahmeraum befindliche Haustier friert und/oder auskühlt. Eine Heizvorrichtung ist besonders vorteilhaft, um eine für das Haustier angenehme Temperatur auch bei nasser und/oder kalter Witterung und/oder starkem Fahrtwind im Aufnahmeraum des Hundefahrradkorbes zu gewährleisten. Die Heizvorrichtung kann beispielsweise eine Heizspirale, eine Heizschlange und/oder ein elektrisches Heizpad umfassen. Bevorzugt weist die Heizvorrichtung mindestens eine wiederaufladbare Stromquelle auf, wie ein Akkuelement, insbesondere einen Lithium-Ionen-Akku. Bevorzugt weist das Bodenelement eine Heizvorrichtung auf. Optional oder alternativ kann die seitliche Wand oder Teilbereiche der seitlichen Wand eine Heizvorrichtung aufweisen. In allen Fällen kann die Heizvorrichtung die gesamte Bodenplatte und/oder die gesamte seitliche Wand bedecken oder nur jeweilige Teile davon. Alternativ oder zusätzlich kann die Heizvorrichtung oder zumindest Teile davon auch in dem Bodenelement und/oder der seitlichen Wand angeordnet sein, beispielsweise in einem Hohlraum des Schaumstoffkerns. Die Heizvorrichtung oder Teile der Heizvorrichtung wie beispielsweise ein Akkuelement sind bevorzugt lösbar in oder an dem Bodenelement und/oder der seitlichen Wand befestigt, beispielsweise innerhalb des Schaumstoffkerns und/oder zwischen Hülle und Schaumstoffkern angeordnet. Im Fall mindestens einer Schicht aus Abstandsgewirk in der Hülle kann die Heizvorrichtung oder Teile davon innerhalb des Abstandsgewirkes und/oder zwischen Abstandsgewirk, Hülle und/oder Schaumstoffkern angeordnet sein. Das Abstandsgewirk kann erhitzte Luft zum Tier nach Art eines Kanals leiten. Die Heizvorrichtung kann dafür ein Lüfterelement umfassen. Gerade wenn sich ein Tier nicht bewegen kann oder soll, kühlt es schnell aus, was mit der Heizvorrichtung wirkungsvoll verhindert wird. Auch kann das Tier ruhiger sein, da es sich nicht zum Aufwärmen bewegen muss, wodurch die Sicherheit erhöht ist. Die Heizvorrichtung ist bevorzugt derartig in dem Bodenelement und/oder der seitlichen Wand befestigt, dass sie leicht zugänglich ist. Hierfür kann das Bodenelement und/oder die seitliche Wand beispielsweise auf der dem Aufnahmeraum entgegengesetzten Seite, insbesondere in der Hülle, einen Reißverschluss, Klettverschluss oder Druckknöpfe aufweisen. Dies ist insbesondere vorteilhaft, da es die Positionierung, die Reparatur und/oder den Austausch der Heizvorrichtung oder Teile der Heizvorrichtung erleichtert.

In weiterer vorteilhafter Ausgestaltung des Fahrradhundekorbs umfasst der Fahrradhundekorb eine Kühlvorrichtung. Die Kühlvorrichtung kann beispielsweise ein Kühlelement, wie ein Peltierelement und/oder eine wiederaufladbare Stromquelle, wie eine Akku- und/oder Solarzelle umfassen. Jeweilige Anordnungen und Gestaltungen können analog zur Heizvorrichtung sein. Die Kühlvorrichtung kann ein Abkühlen des Aufnahmeraums und damit angenehme Temperaturen für das Tier auch im Sommer ermöglichen. Die Heizvorrichtung oder Teile der Heizvorrichtung und die Kühlvorrichtung oder Teile der Kühlvorrichtung können bevorzugt gegeneinander ausgetauscht werden. Dies erlaubt ein flexibles Temperaturmanagement bei verschiedenen Witterungsbedingungen und zu verschiedenen Jahreszeiten. Der Fahrradhundekorb kann auch sowohl die Heizvorrichtung als auch die Kühlvorrichtung umfassen. Damit kann auch eine Klimaanlage bereitgestellt werden. Alternativ oder zusätzlich kann auch eine Lüftung mit einem elektrisch betriebenen Lüfter vorgesehen sein, um ein Entstehen von Stauluft im Aufnahmeraum zu verhindern.

Ein zweiter Aspekt der Erfindung betrifft ein Fahrrad mit einem daran, insbesondere lösbar, befestigten Fahrradhundekorb gemäß dem ersten Erfindungsaspekt. Dies ermöglicht den einfachen und sicheren Transport von Haustieren, wie beispielsweise einem Hund oder einer Katze, mit dem Fahrrad. Der Fahrradhundekorb kann leicht an dem Fahrrad anzubringen sein und auch wieder zu lösen sein, wodurch der Fahrradhundekorb gut vor Witterung und Diebstahl geschützt werden kann. Der Fahrradhundekorb dämpft während des Transportes auftretende Stöße, bietet dem Tier einen bequemen Aufnahmeraum und schützt das Tier zuverlässig im Falle eines Unfalls. Die sich aus dem Fahrradhundekorb gemäß dem ersten Erfindungsaspekt ergebenden Merkmale und Vorteile sind der Beschreibung des ersten Erfindungsaspektes zu entnehmen, wobei vorteilhafte Ausgestaltungen des ersten Erfindungsaspekts als vorteilhafte Ausgestaltungen des zweiten Erfindungsaspektes und umgekehrt anzusehen sind.

Ein dritter Aspekt der Erfindung betrifft eine Verwendung eines Fahrradhundekorbs gemäß dem ersten Erfindungsaspekt zum Transport eines Haustiers mittels eines Fahrrads und/oder eine Verwendung des Fahrrads gemäß des zweiten Erfindungsaspektes zum Transport eines Haustiers. Durch diese Verwendung kann das Haustier beim Transport mit einem zweirädrigen Fahrzeug besonders zuverlässig geschützt werden. Die sich aus dem Fahrradhundekorb gemäß dem ersten Erfindungsaspekt sowie aus dem Fahrrad mit Fahrradhundekorb gemäß dem zweiten Erfindungsaspekt ergebenden Merkmale und Vorteile sind der Beschreibung des ersten beziehungsweise zweiten Erfindungsaspektes zu entnehmen, wobei vorteilhafte Ausgestaltungen des ersten beziehungsweise zweiten Erfindungsaspekts als vorteilhafte Ausgestaltungen des dritten Erfindungsaspektes und umgekehrt anzusehen sind.

Ein vierter Aspekt betrifft ein Verfahren zum Transport eines Haustieres mit einem Fahrradhundekorb gemäß dem ersten Erfindungsaspekt, bevorzugt mit einem Fahrrad mit einem daran befestigten Fahrradhundekorb gemäß dem zweiten Erfindungsaspekt. Hierbei wird das Haustier vor, bevorzugt aber nach der Befestigung des Fahrradhundekorbes an dem Fahrrad in den Fahrradhundekorb bewegt und optional darin mittels einer Anschnallvorrichtung fixiert. Bevorzugt wird der Fahrradhundekorb in Fahrtrichtung vorne an dem Fahrrad, insbesondere lösbar, befestigt. Dies erleichtert die Aufsicht des Haustieres durch den Haustierbesitzer und erhöht die Sicherheit während des Transportes. Im Falle eines Unfalls bietet der Fahrradhundekorb besonderen Schutz, wie oben ausgeführt. Bei Ankunft am Zielort wird die Fixierung gelöst und das Haustier aus dem Aufnahmeraum bewegt. Dies kann nach dem Entfernen des Fahrradhundekorbes von dem Fahrrad geschehen, bevorzugt jedoch davor.

Der Fahrradhundekorb gemäß dem ersten Erfindungsaspekt und das Fahrrad mit einem daran befestigten Fahrradhundekorb gemäß dem zweiten Erfindungsaspekt eignen sich also dazu, durch das Verfahren gemäß dem vierten Aspekt verwendet zu werden, wobei auch hier der Fahrradhundekorb gemäß dem ersten Erfindungsaspekt und das Fahrrad gemäß dem zweiten Erfindungsaspekt gemäß dem drittem Erfindungsaspekt verwendet werden können. Die sich aus dem Fahrradhundekorb gemäß dem ersten Erfindungsaspekt und dem Fahrrad mit einem daran befestigten Fahrradhundekorb gemäß dem zweiten Erfindungsaspekt sowie deren Verwendung gemäß dem dritten Erfindungsaspekts ergebenden Merkmale und Vorteile sind der Beschreibung des ersten, zweiten und dritten Erfindungsaspekts zu entnehmen, wobei vorteilhafte Ausgestaltungen des ersten, zweiten bzw. dritten Erfindungsaspekts als vorteilhafte Ausgestaltungen des vierten Aspekts und umgekehrt anzusehen sind.

Ein fünfter Aspekt der Erfindung betrifft eine Verwendung eines Fahrradhundekorbs gemäß dem ersten Erfindungsaspekt zum Transport eines Haustiers nach Art eines Rucksackes. Durch diese Verwendung kann das Haustier bequem auf dem Rücken transportiert werden. Die sich aus dem Fahrradhundekorb gemäß dem ersten Erfindungsaspekt ergebenden Merkmale und Vorteile sind der Beschreibung des ersten Erfindungsaspektes zu entnehmen, wobei vorteilhafte Ausgestaltungen des ersten Erfindungsaspekts als vorteilhafte Ausgestaltungen des fünften Erfindungsaspektes und umgekehrt anzusehen sind.

Ein sechster Aspekt betrifft ein Verfahren zum Transport eines Haustieres mit einem Fahrradhundekorb gemäß dem ersten Erfindungsaspekt, bevorzugt nach Art eines Rucksackes gemäß dem fünften Erfindungsaspekt. Hierbei wird das Haustier in den, bevorzugt abgestellten, Fahrradhundekorb bewegt, optional darin mittels einer Anschnallvorrichtung fixiert, und dann nach Art eines Rucksackes auf dem Rücken transportiert. Dies ermöglicht einen komfortablen Transport eines Haustieres ohne Verwendung eines zweirädrigen Transportmittels. Bei Ankunft am Zielort wird der Fahrradhundekorb abgestellt, optional die Fixierung gelöst, und das Haustier aus dem Aufnahmeraum bewegt. Davor, danach oder auch zwischendurch kann der Fahrradhundekorb aber auch mit einem Fahrrad zum Transport des Haustiers verwendet werden. Dabei kann das Haustier ggf. in dem Aufnahmeraum bleiben. Insgesamt kann das Haustier so über weite Strecken sicher und komfortabel transportiert werden, wobei Teile der Strecke beispielsweise mit einem Fahrrad und andere Teile beispielsweise zu Fuß zurückgelegt werden können.

Der Fahrradhundekorb gemäß dem ersten Erfindungsaspekt eignet sich also dazu, durch das Verfahren gemäß dem sechsten Aspekt verwendet zu werden, wobei auch hier der Fahrradhundekorb gemäß dem ersten Erfindungsaspekt gemäß dem fünften Erfindungsaspekt verwendet werden kann. Die sich aus dem Fahrradhundekorb gemäß dem ersten Erfindungsaspekt sowie deren Verwendung gemäß dem fünften Erfindungsaspekts ergebenden Merkmale und Vorteile sind der Beschreibung des ersten und fünften Erfindungsaspekts zu entnehmen, wobei vorteilhafte Ausgestaltungen des ersten bzw. fünften Erfindungsaspekts als vorteilhafte Ausgestaltungen des sechsten Aspekts und umgekehrt anzusehen sind.

Weitere Merkmale und Ausführungsformen sind durch die folgende Gegenstandsliste definiert:
1. Fahrradhundekorb (10) zum Transport von Haustieren,
   wobei der Fahrradhundekorb (10) mindestens ein Bodenelement (12) und mindestens eine wenigstens bereichsweise das Bodenelement (12) umlaufende seitliche Wand (14) aufweist, welche zusammen einen Aufnahmeraum (16) für ein zu transportierendes Haustier definieren,
   wobei die seitliche Wand (14) den Aufnahmeraum (16) wenigstens nach vorne und in zwei Seitenrichtungen begrenzt,
   wobei die seitliche Wand (14) wenigstens eine Hülle und wenigstens einen Schaumstoffkern aufweist.
2. Fahrradhundekorb (10) nach Gegenstand 1,
   wobei auch das Bodenelement (12) eine Hülle und einen Schaumstoffkern aufweist.
3. Fahrradhundekorb (10) nach einem der Gegenstände 1 oder 2,
   wobei der Schaumstoffkern der seitlichen Wand (14) wenigstens teilweise für diese strukturell tragend ist
   und/oder
   wobei der Schaumstoffkern des Bodenelements (12) wenigstens teilweise für dieses strukturell tragend ist.
4. Fahrradhundekorb (10) nach einem der vorhergehenden Gegenstände,
   wobei die seitliche Wand (14) wenigstens zwei seitliche Teilbereiche (34) und einen sich dazwischen erstreckenden vorderen Teilbereich (18) aufweist, welche jeweils den Schaumstoffkern aufweisen.
5. Fahrradhundekorb (10) nach einem der vorhergehenden Gegenstände,
   wobei wenigstens eine der Hüllen oder ein Teilbereich der Hülle(n) eine Steppung (22) aufweist, welche gemeinsam mit dem Schaumstoffkern wenigstens teilweise strukturell tragend ist,
   wobei optional in der Steppung (22) der Hülle zusätzlich Schaumstoff angeordnet ist, um das Bodenelement (12) und/oder die seitliche Wand (14) zu verstärken.
6. Fahrradhundekorb (10) nach einem der vorhergehenden Gegenstände,
   wobei das Bodenelement (12) und/oder die seitliche Wand (14) ausschließlich durch den Schaumstoffkern und optional zusätzlich die Hülle, insbesondere deren Steppung (22), strukturell getragen ist
   und/oder
   der Fahrradhundekorb (10) frei von weiteren strukturell tragenden Stützelementen ist.
7. Fahrradhundekorb (10) nach einem der vorhergehenden Gegenstände,
   wobei ein vorderer Teilbereich der seitlichen Wand (18) höher als mindestens ein weiterer Teilbereich der seitlichen Wand ausgebildet ist
   und/oder
   wobei der Fahrradhundekorb (10) ein Deckenelement (20) aufweist, mittels welchem der Aufnahmeraum (16) wenigstens teilweise in Hochrichtung begrenzt ist.
8. Fahrradhundekorb (10) nach einem der vorhergehenden Gegenstände,
   wobei der Fahrradhundekorb ein Verschlusselement (24) umfasst, welches zwischen einer Offenstellung, in welcher der Aufnahmeraum (16) zugänglich ist, und einer Schließstellung, in welcher der Aufnahmeraum (16), insbesondere dessen Zugangsöffnung (26), verschlossen ist, verstellbar ist.
9. Fahrradhundekorb (10) nach einem der vorhergehenden Gegenstände,
   wobei der Fahrradhundekorb (10) eine Regenhülle umfasst und optional einen Aufbewahrungsraum zum Verstauen der Regenhülle.
10. Fahrradhundekorb (10) nach einem der vorhergehenden Gegenstände,
   wobei der Fahrradhundekorb (10) wenigstens ein Trageelement (42) umfasst und wobei das wenigstens eine Trageelement (42) vorzugsweise an mindestens einem der seitlichen Wandbereiche (14) und/oder an dem Bodenelement (12), bevorzugt lösbar, befestigt ist.
11. Fahrradhundekorb (10) nach Gegenstand 10,
   wobei zwei Trageelemente (42) so an dem Bodenelement (12) befestigt sind, dass der Fahrradhundekorb (10) nach Art eines Rucksackes getragen werden kann.
12. Fahrradhundekorb (10) nach einem der vorhergehenden Gegenstände,
   wobei der Fahrradhundekorb (10) eine Polsterung (48) umfasst, welche bevorzugt ein Abstandsgewirk umfasst oder aus diesem besteht.
13. Fahrrad (30) mit einem daran, insbesondere lösbar, befestigten Fahrradhundekorb (10) nach einem der vorhergehenden Gegenstände.
14. Verwendung des Fahrradhundekorbs (10) nach einem der Gegenstände 1 bis 12 zum Transport eines Haustiers mittels eines Fahrrads (30) und/oder Verwendung des Fahrrads (30) nach Gegenstand 10 zum Transport eines Haustiers.
15. Verwendung des Fahrradhundekorbs (10) nach einem der Gegenstände 1 bis 12 zum Transport eines Haustiers nach Art eines Rucksackes.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in de Figur alleine gezeigten Merkmale und Merkmalskombinationen sind nicht nur in den jeweils angegebenen Kombinationen, sondern auch in anderen Kombinationen oder alleinstehend verwendbar, ohne den Rahmen der Erfindung zu verlassen.

### Dabei zeigt:

Fig. 1 in einer schematischen Perspektivansicht einen Fahrradhundekorb zum Transport von Haustieren und
Fig. 2 in einer schematischen Perspektivansicht wie der Fahrradhundekorb gemäß Fig. 1 als Rucksack nutzbar ist.

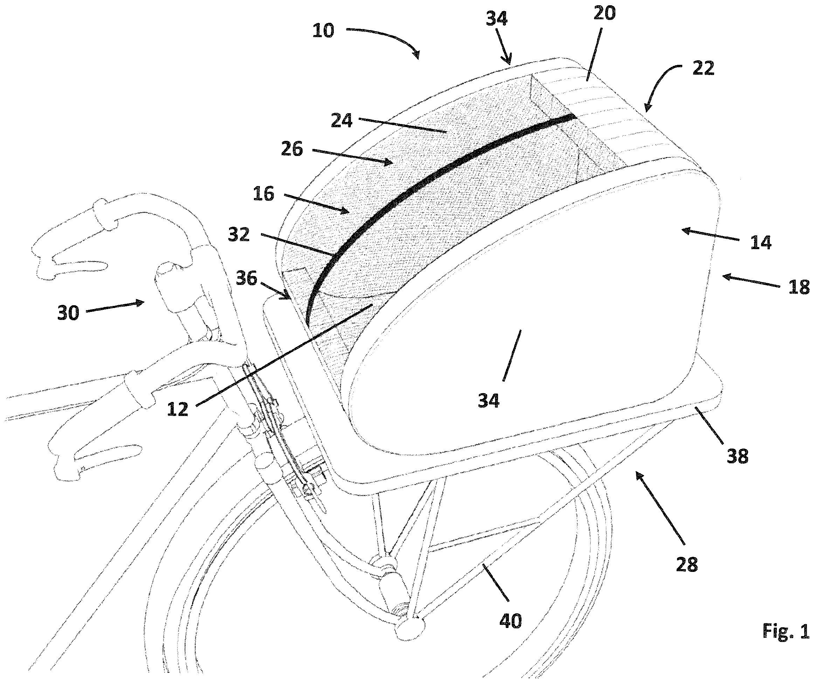

Fig. 1 zeigt einen Fahrradhundekorb 10 zum Transport von Haustieren, wie beispielsweise einem Hund oder einer Katze. Der Fahrradhundekorb 10 weist ein im Wesentlichen rechteckiges Bodenelement 12 auf, welches von einer das Bodenelement 12 komplett umlaufenden seitlichen Wand 14 eingefasst ist. Das Bodenelement 12 und die seitliche Wand 14 definieren dabei gemeinsam einen Aufnahmeraum 16, in welchem ein Haustier zu dessen Transport aufgenommen werden kann. Das Bodenelement 12 bildet dabei eine Bodenfläche, auf welcher das Haustier beispielsweise sitzen oder liegen kann. Die seitliche Wand 14 begrenzt den Aufnahmeraum 16 in alle seitlichen Richtungen und verhindert dort, dass das Haustier aus dem Aufnahmeraum 16 seitlich herausfallen kann.

Das Bodenelement 12 und die seitliche Wand 14 umfassen einen Schaumstoffkern, der von einer bevorzugt wasserabweisenden Hülle ummantelt ist. Der Schaumstoffkern ist selbsttragend ausgebildet und hält auch die Hülle in Form. Für das Bodenelement 12 und die seitliche Wand 14 ist der Schaumstoffkern also im Wesentlichen alleine strukturell tragend. So kann die Formstabilität des Fahrradhundekorbes gewährleistet werden und gleichzeitig ein Verletzungsrisiko durch zusätzliche harte Stützstrukturen, wie metallene Stäbe oder Gestänge, vermieden werden. Der Schaumstoffkern gibt wenigstens einseitig bei Belastung elastisch nach und stellt so eine Polsterung und Federung zur Verfügung.

Der Fahrradhundekorb 10 weist einen vorderen Teilbereich 18 der seitlichen Wand 14 auf, der höher als der Rest der seitlichen Wand 14 ist, sowie ein Deckenelement 20. Wie in Fig. 1 gezeigt, können zumindest der vordere Teilbereich 18 der seitlichen Wand 14 sowie das Deckenelement 20 einstückig ausgebildet sein. Der vordere Teilbereich 18 der seitlichen Wand 14 sowie das Deckenelement 20 bieten einen Schutz vor Fahrtwind sowie zudem Schutz vor Sonneneinstrahlung und Regen. Das Deckenelement 20 weist dabei gemeinsam mit dem vorderen Teilbereich 18 zusammen einen einstückigen Schaumstoffkern und eine Hülle auf. Der Übergang zwischen Deckenelement 20 und dem vorderen Teilbereich 18 ist gerundet ausgebildet, um den Fahrtwiderstand gering zu halten und Verwirbelungen zu minimieren, welche das in dem Aufnahmeraum 16 aufgenommene Tier sonst stören könnten.

Wie in Fig. 1 gezeigt, weisen der vordere Teilbereich 18 der seitlichen Wand 14 sowie das Deckenelement 20 eine Steppung 22 auf, wobei auch der Rest der seitlichen Wand 14 und das Bodenelement 12 eine Steppung aufweisen kann. Die Steppung 22 kann dabei zumindest teilweise strukturell stützend für das Deckenelement 20 und den vorderen Teilbereich 18 der seitlichen Wand 14 sein. So kann auch im Falle eines Unfalls mit Überschlag die Formstabilität des Fahrradhundekorbes gewährleistet werden und gleichzeitig ein Verletzungsrisiko durch zusätzliche harte Stützstrukturen, wie metallene Stäbe oder Gestänge, vermieden werden. Zudem verbessert die Steppung 22 die Polsterung und trägt zum Komfort des Haustiers bei.

Weiterhin weist der Fahrradhundekorb 10 ein Verschlusselement 24 auf, welches vorliegend als Netz ausgebildet ist. Um ein Durchhängen des Netzes zu verhindern kann das Verschlusselement eine Versteifung 32 aufweisen, die beispielsweise als dünner Draht ausgebildet ist. Mit dem Netz kann eine Zugangsöffnung 26 verschlossen werden. Die Zugangsöffnung 26 ist dabei in Fahrtrichtung hinten am Fahrradhundekorb 10 und damit zum Fahrer eines Fahrrads 30 angeordnet und durch eine Oberkante eines hinteren, niedrigeren Teilbereichs 36 der seitlichen Wand 14, das hintere Ende des Deckenelements 20 und jeweilige Oberkanten der seitlichen Teilbereiche 34 der seitlichen Wand 14 definiert. Durch das geschlossene Verschlusselement 24, wie hier gezeigt, kann das Haustier auch in Hochrichtung den Aufnahmeraum 16 nicht verlassen.

Wie in Fig. 1 gezeigt, kann der Fahrradhundekorb 10 beispielsweise auf einem Gepäckträger 28 im in Fahrtrichtung vorderen Bereich eines nur ausschnittsweise dargestellten Fahrrads 30 bevorzugt lösbar befestigt werden Der Gepäckträger 28 weist dabei ein Gestell 40 und eine Platte 38, auf welcher der Fahrradhundekorb 10 beispielsweise mit Schnappverbindungen fixiert ist. Durch die Ausrichtung des Fahrradhundekorbs 10 mit Zugangsöffnung 26 entgegen der Fahrrichtung ist Blickkontakt zwischen Haustierbesitzer und Haustier möglich, das beruhigend auf das Haustier wirkt, die Aufsicht erleichtert und einen sicheren Transport des Haustieres wesentlich begünstigt. Zudem ist das Haustier auch bei einem Überschlag so sicher aufgenommen.

Die jeweiligen seitlichen Teilbereiche 34, welche sich zwischen einer Vorderseite und einer Rückseite des Fahrradhundekorbs 10 erstrecken, sind tropfenförmig ausgebildet, Damit ergibt sich auch für den Fahrradhundekorb 10 eine Tropfenform mit einem in Fahrtrichtung weisenden dicken Ende, was aerodynamisch besonders vorteilhaft ist.

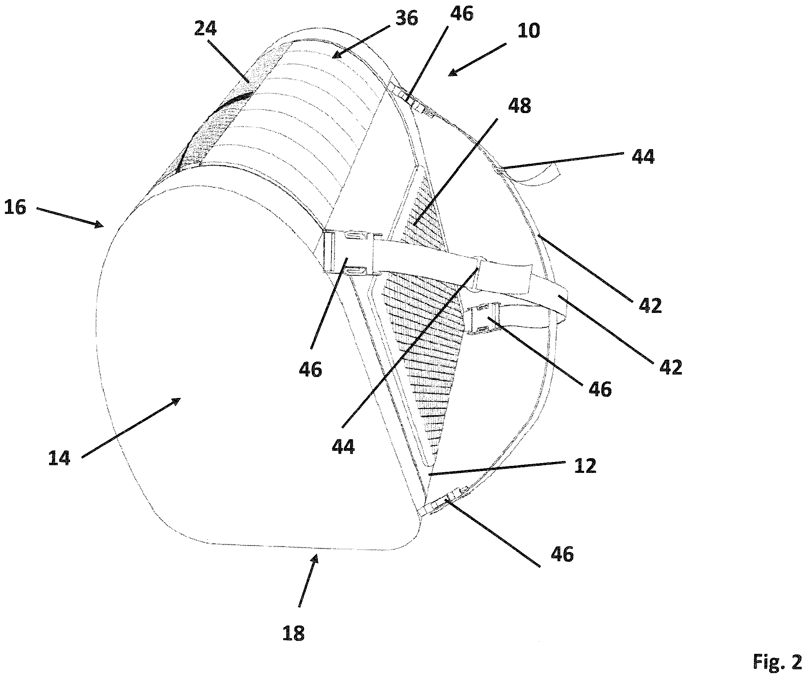

Fig. 2 zeigt in einer schematischen Perspektivansicht, wie der Fahrradhundekorb gemäß Fig. 1 als Rucksack nutzbar ist. Wie in Fig. 2 gezeigt, entspricht in diesem Fall die Orientierung des Fahrradhundekorbes 10 einer um circa 90° gedrehten Orientierung des Fahrradhundekorbes 10 bei Anbringung auf einem Fahrrad wie in Fig. 1 gezeigt.

Wie in Fig. 2 gezeigt, kann der Fahrradhundekorb 10 zum Transport eines Haustieres nach Art eines Rucksackes verwendet werden. Dafür umfasst der Fahrradhundekorb 10 jeweilige Tragegurte 42, welche nach Art eines Rucksacks an einer Unterseite des Fahrradhundekorbs an der Außenseite des Bodenelements 12 befestigt sind. Die Tragegurte 42 sind bevorzugt nach Art von Rucksacktragegurten ausgebildet, insbesondere als biegeschlaffe Tragegurte, und an vier Bereichen des Bodenelements 12, bevorzugt lösbar, befestigbar. Wie in Fig. 2 gezeigt, können die Tragegurte 42 ein Rechteck ausbilden, welches in Bezug auf die Fläche des Bodenelements 12 zentral angeordnet ist. Die zwei Tragegurte 42 können dabei an dem Bodenelement 12 im Wesentlichen parallel zueinander und bevorzugt schulter- bzw. hüftbreit zueinander beabstandet angeordnet sein. Die Tragegurte 42 umfassen dabei jeweilige Verstellelemente 44, mittels welchen eine jeweilige Länge der Tragegurte 42 an einen Träger angepasst werden können. Zudem können die Tragegurte in einem Brustbereich des Trägers miteinander verbunden werden, um ein Abrutschen von den Schultern des Trägers zuverlässig zu verhindern. Die Verbindung kann beispielsweise direkt erfolgen oder beabstandet mittels eines zusätzlichen Bandelements. Alternativ oder zusätzlich können die Tragegurte 42 auch zu diesem Zweck über Kreuz geführt werden. Vorliegend ist keine parallele, sondern eine kreuzende Anordnung der Tragegurte 42 gezeigt.

Die Tragegurte 42 sind dabei mittels jeweiliger 46 Clipselemente 46 an ihren jeweiligen Enden mit jeweiligen Endbereichen des Bodenelements 12 lösbar verbunden. Dadurch können die Tragegurte 42 einfach von dem Fahrradhundekorb 10 entfernt werden, wenn diese nicht benötigt werden. Alternativ oder zusätzlich kann der Fahrradhundekorb 10 auch weitere Befestigungsmöglichkeiten zum Anbringen der Tragegurte 42 mittels der Clipselemente 46 aufweisen. Beispielsweise kann der Fahrradhundekorb 10 auch dazu ausgebildet sein, die Tragegurte 42 an der seitlichen Wand 14 befestigen zu können, insbesondere in einem oberen Endbereich. Dadurch kann der Fahrradhundekorb 10 auch nach Art einer Tasche mit den Tragegurten 42 konfiguriert und getragen werden.

Wie in Fig. 2 ferner zu erkennen ist, wird der Fahrradhundekorb 10 bei dem Tragen nach Art eines Rucksacks im Wesentlichen so ausgerichtet, dass der vordere Teilbereich 18 nun als Boden im Aufnahmeraum 16 des Fahrradhundekorbs fungiert. Das ist insofern vorteilhaft, als dass der vordere Teilbereich 18 eine größere Erstreckung als beispielsweise der niedrige Teilbereich 34 aufweist und somit eine besonders große Sitzfläche für das Haustier auch bei Nutzung des Fahrradhundekorbs 10 als Rucksack bereitstellt. Gleichzeitig stellt das Bodenelement 12 einen großflächigen Rückenbereich, womit der Fahrradhundekorb angenehm zu tragen ist und nicht übermäßig weit vom Träger absteht.

Dabei bilden sowohl das Deckenelement 20 als auch das Verschlusselement 24 eine Begrenzung, welche verhindert, dass das Haustier hinten aus dem Rucksack aus dem Aufnahmeraum 16 fallen kann. Der Träger kann so nach Beendigung einer Fahrradtour das Haustier unbesorgt auf seinem Rücken weitertragen, ohne das andere Tragemittel notwendig sind. Überdies wird beim Transport des Fahrradhundekorbes 10 nach Art eines Rucksackes durch das Deckenelement 20, den vorderen Teilbereich der seitlichen Wand 18, das Bodenelement 12 und den seitlichen Teilbereichen der seitlichen Wand 14 eine Mulde ausgebildet, welche eine besonders bequeme Lagerung des Haustieres beim Transport erlaubt.

Außerdem weist der Fahrradhundekorb 10, wie in Fig. 2 zu erkennen, eine Polsterung 48 an der Außenseite des Bodenelements 12 auf. Diese Polsterung 48 ist bei Nutzung des Fahrradhundekorbs 10 als Rucksack dem Träger zugewandt und vorzugsweise an dessen Rücken anliegend, wodurch dieser dann besonders komfortabel zu tragen ist. Bei der Nutzung als Fahrradkorb, wie in Fig. 1 gezeigt, liegt die Polsterung 48 vorzugsweise auf der Platte 38 des Gestells 40 des Fahrrads 30 auf, wodurch hier eine zusätzlich Federung und/oder Dämpfung für ein in dem Aufnahmeraum 16 befindliches Tier bereitgestellt werden kann.

Vorzugsweise umfasst die Polsterung 48 ein Abstandsgewirk und/oder einen Schaumstoff, insbesondere einen elastischen Schaumstoff. Dadurch ist die Polsterung 48 besonders leicht und kann, auch bei einer geringen Dicke, eine gute Polsterwirkung erzielen. Zudem kann so auch eine Belüftung des anliegenden Rückens des Trägers bei der Nutzung des Fahrradhundekorbs 10 als Rucksack bereit gestellt werden. Dadurch kann beispielsweise ein unangenehmes Schwitzen und/oder ein Hitzestau am Rücken des Trägers vermieden werden. Insbesondere ein Abstandsgewirk kann hier eine hohe Luftdurchlässigkeit aufweisen und entsprechend vorteilhaft sein.

### Bezugszeichenliste

- 10: Fahrradhundekorb
- 12: Bodenelement
- 14: seitliche Wand
- 16: Aufnahmeraum
- 18: vorderer Teilbereich
- 20: Deckenelement
- 22: Steppung
- 24: Verschlusselement
- 26: Zugangsöffnung
- 28: Gepäckträger
- 30: Fahrrad
- 32: Versteifung
- 34: seitlicher Teilbereich
- 36: niedriger Teilbereich
- 38: Platte
- 40: Gestell
- 42: Tragegurt
- 44: Verstellelement
- 46: Clipselement
- 48: Polsterung

## Patentansprüche

1. Fahrradhundekorb (10) zum Transport von Haustieren,
wobei der Fahrradhundekorb (10) mindestens ein Bodenelement (12) und mindestens eine wenigstens bereichsweise das Bodenelement (12) umlaufende seitliche Wand (14) aufweist, welche zusammen einen Aufnahmeraum (16) für ein zu transportierendes Haustier definieren,
wobei die seitliche Wand (14) den Aufnahmeraum (16) wenigstens nach vorne und in zwei Seitenrichtungen begrenzt,
wobei die seitliche Wand (14) wenigstens eine Hülle und wenigstens einen Schaumstoffkern aufweist, und
wobei ein vorderer Teilbereich der seitlichen Wand (18) höher als mindestens ein weiterer Teilbereich der seitlichen Wand ausgebildet ist.

2. Fahrradhundekorb (10) nach Anspruch 1,
wobei auch das Bodenelement (12) eine Hülle und einen Schaumstoffkern aufweist.

3. Fahrradhundekorb (10) nach einem der Ansprüche 1 oder 2,
wobei der Schaumstoffkern der seitlichen Wand (14) wenigstens teilweise für diese strukturell tragend ist
und/oder
wobei der Schaumstoffkern des Bodenelements (12) wenigstens teilweise für dieses strukturell tragend ist.

4. Fahrradhundekorb (10) nach einem der vorhergehenden Ansprüche,
wobei die seitliche Wand (14) wenigstens zwei seitliche Teilbereiche (34) und einen sich dazwischen erstreckenden vorderen Teilbereich (18) aufweist, welche jeweils den Schaumstoffkern aufweisen.

5. Fahrradhundekorb (10) nach einem der vorhergehenden Ansprüche,
wobei wenigstens eine der Hüllen oder ein Teilbereich der Hülle(n) eine Steppung (22) aufweist, welche gemeinsam mit dem Schaumstoffkern wenigstens teilweise strukturell tragend ist,
wobei optional in der Steppung (22) der Hülle zusätzlich Schaumstoff angeordnet ist, um das Bodenelement (12) und/oder die seitliche Wand (14) zu verstärken.

6. Fahrradhundekorb (10) nach einem der vorhergehenden Ansprüche,
wobei das Bodenelement (12) und/oder die seitliche Wand (14) ausschließlich durch den Schaumstoffkern und optional zusätzlich die Hülle, insbesondere deren Steppung (22), strukturell getragen ist
und/oder
der Fahrradhundekorb (10) frei von weiteren strukturell tragenden Stützelementen ist.

7. Fahrradhundekorb (10) nach einem der vorhergehenden Ansprüche,
wobei der Fahrradhundekorb (10) ein Deckenelement (20) aufweist, mittels welchem der Aufnahmeraum (16) wenigstens teilweise in Hochrichtung begrenzt ist.

8. Fahrradhundekorb (10) nach einem der vorhergehenden Ansprüche,
wobei der Fahrradhundekorb ein Verschlusselement (24) umfasst, welches zwischen einer Offenstellung, in welcher der Aufnahmeraum (16) zugänglich ist, und einer Schließstellung, in welcher der Aufnahmeraum (16), insbesondere dessen Zugangsöffnung (26), verschlossen ist, verstellbar ist.

9. Fahrradhundekorb (10) nach einem der vorhergehenden Ansprüche,
wobei der Fahrradhundekorb (10) eine Regenhülle umfasst und optional einen Aufbewahrungsraum zum Verstauen der Regenhülle.

10. Fahrradhundekorb (10) nach einem der vorhergehenden Ansprüche,
wobei der Fahrradhundekorb (10) wenigstens ein Trageelement (42) umfasst und
wobei das wenigstens eine Trageelement (42) vorzugsweise an mindestens einem der seitlichen Wandbereiche (14) und/oder an dem Bodenelement (12), bevorzugt lösbar, befestigt ist.

11. Fahrradhundekorb (10) nach Anspruch 10,
wobei zwei Trageelemente (42) so an dem Bodenelement (12) befestigt sind, dass der Fahrradhundekorb (10) nach Art eines Rucksackes getragen werden kann.

12. Fahrradhundekorb (10) nach einem der vorhergehenden Ansprüche,
wobei der Fahrradhundekorb (10) eine Polsterung (48) umfasst, welche bevorzugt ein Abstandsgewirk umfasst oder aus diesem besteht.

13. Fahrrad (30) mit einem daran, insbesondere lösbar, befestigten Fahrradhundekorb (10) nach einem der vorhergehenden Ansprüche.

14. Verwendung des Fahrradhundekorbs (10) nach einem der Ansprüche 1 bis 12 zum Transport eines Haustiers mittels eines Fahrrads (30) und/oder Verwendung des Fahrrads (30) nach Anspruch 10 zum Transport eines Haustiers.

15. Verwendung des Fahrradhundekorbs (10) nach einem der Ansprüche 1 bis 12 zum Transport eines Haustiers nach Art eines Rucksackes.
